(19) Europäisches Patentamt / European Patent Office / Office européen des brevets

(11) EP 1 896 878 B1

(12) **FASCICULE DE BREVET EUROPEEN**

(45) Date de publication et mention de la délivrance du brevet:
**15.11.2017 Bulletin 2017/46**

(21) Numéro de dépôt: **06778964.4**

(22) Date de dépôt: **22.06.2006**

(51) Int Cl.:
***G02B 1/10*** (2015.01) ***B29D 11/00*** (2006.01)
***G02C 7/02*** (2006.01)

(86) Numéro de dépôt international:
**PCT/FR2006/050619**

(87) Numéro de publication internationale:
**WO 2006/136757 (28.12.2006 Gazette 2006/52)**

(54) **PROCEDE D'OBTENTION D'UN ARTICLE EN MATERIAU TRANSPARENT EXEMPT DE RAIES DE SURFACAGE VISIBLES ET ARTICLE OBTENU**

VERFAHREN ZUR HERSTELLUNG EINES GEGENSTANDS AUS EINEM TRANSPARENTEN MATERIAL OHNE SICHTBARE MANTELLINIEN UND DANACH HERGESTELLTER GEGENSTAND

METHOD FOR PRODUCING AN ARTICLE MADE OF A TRANSPARENT MATERIAL DEVOID OF VISIBLE SURFACE LINES AND THE THUS OBTAINED ARTICLE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.06.2005 FR 0506350**

(43) Date de publication de la demande:
**12.03.2008 Bulletin 2008/11**

(73) Titulaire: **ESSILOR INTERNATIONAL (Compagnie Générale d'Optique)**
**94220 Charenton-le-Pont (FR)**

(72) Inventeurs:
- **BIVER, Claudine**
  **F-92000 Nanterre (FR)**
- **LESARTRE, Noémie**
  **F-75001 Paris (FR)**
- **PADIOU, Jean-Marc**
  **F-94500 Champigny Sur Marne (FR)**
- **VALERI, Robert**
  **Tampa, Florida 33629 (US)**

(74) Mandataire: **Jacobacci Coralis Harle**
**32, rue de l'Arcade**
**75008 Paris (FR)**

(56) Documents cités:
**EP-A1- 0 556 646**
**WO-A-01/67139**
**WO-A-03/056366**
**WO-A-2004/101260**
**WO-A-2005/063473**
**US-A- 4 049 861**
**US-A- 4 319 945**
**US-A- 4 332 861**
**US-A- 4 417 790**
**US-A- 5 638 479**
**US-B1- 6 268 055**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 896 878 B1

## Description

L'invention concerne de manière générale un procédé d'obtention d'un article transparent, exempt de défauts optiques visibles après des opérations de surfaçage, et son application à la fabrication d'articles d'optique telles que des lentilles, en particulier des lentilles ophtalmiques et préférentiellement des verres de lunettes.

Classiquement, les faces principales d'un substrat en matériau transparent pour l'obtention d'un article d'optique sont soumises à un surfaçage.

Le surfaçage du substrat comprend l'ensemble des opérations conduisant à la réalisation d'un article d'optique tel qu'un verre de lunette dont les surfaces sont parfaitement polies et présentent les courbures (puissances) désirées.

Typiquement, le surfaçage comprend trois étapes successives, à savoir l'ébauchage, le doucissage et le polissage.

L'ébauchage est une étape de traitement mécanique qui, à l'aide d'un outil diamanté à gros grains ou une fraise à plaquettes, a pour objet la mise à la courbure d'une face du substrat. Le doucissage est également une étape de traitement mécanique qui se pratique après l'ébauchage, à l'aide d'un outil abrasif à grain fin (diamant, émeri, carborundum...). La surface du substrat après un tel doucissage présente un aspect satiné.

La dernière opération du surfaçage qui conduit à une surface parfaitement polie et transparente est dénommée polissage et consiste encore en une étape de traitement mécanique à l'aide de disques de feutre en contact avec une suspension d'un abrasif très fin (alumine, diamant..).

L'ébauchage qui, comme indiqué ci-dessus, a pour but principal de conférer à au moins une face principale du substrat, une courbure désirée, est une étape de courte durée qui a pour résultat un substrat opaque ou opalescent dont la face ébauchée présente des ondulations, défauts de grande amplitude et de basse fréquence, généralement sous la forme d'un motif en spirale, auxquelles se superpose une rugosité constituée par des défauts de faible amplitude et de fréquence élevée.

Le doucissage modifie encore la géométrie de la face traitée du substrat mais a essentiellement pour objet de faire disparaître autant que possible les ondulations et de réduire la rugosité.

Cette étape de traitement mécanique conduit à un article translucide (mais non encore transparent) et dont la face doucie comporte encore une rugosité importante.

Enfin, le polissage, étape de traitement mécanique relativement longue, qui ne modifie pas la géométrie de la face traitée du substrat, élimine autant que possible la rugosité restante pour finalement obtenir un article optique transparent.

Ces techniques de surfaçage ont connu des évolutions récentes.

En particulier, les machines de type CNC (Computer Numeric Control), par exemple de la société Schneider, permettent d'éliminer en grande partie les défauts du type ondulation lors de l'étape d'ébauchage et d'obtenir une qualité de surface telle que l'on peut supprimer l'étape de doucissage et procéder directement à l'étape de polissage.

Cependant, ces techniques ne permettent pas d'obtenir des substrats totalement exempts de défauts optiques, en particulier subsistent de fines rayures liées à cette opération de polissage à la surface du substrat.

D'une manière générale, il a déjà été décrit dans l'état de l'art des techniques visant à couvrir par un revêtement la surface rugueuse d'un substrat ou verre optique préalablement ébauché et éventuellement douci, afin d'améliorer sa surface optique et supprimer ainsi l'une et/ou l'autre des étapes de doucissage ou de polissage.

Ainsi, le brevet US-4,417,790 propose un procédé de finition dans lequel le verre simplement ébauché est verni de façon à obtenir une surface de qualité optique et réduire le temps de finition du verre.

Selon ce brevet, on dépose à la surface du verre un revêtement d'épaisseur d'environ $10R_a$ où $R_a$ est la rugosité moyenne arithmétique de la surface usinée.

Ce procédé ne donne pas entière satisfaction du point vue cosmétique et ne permet pas d'éliminer tous les défauts de la surface, certains restant visibles à la lampe à arc.

Le brevet WO-0167139 propose un procédé de finissage d'une surface d'une lentille ophtalmique à une prescription donnée, selon lequel on applique sur la surface une couche de vernis d'épaisseur comprise entre environ 30 $R_a$ et 800 $R_a$, où $R_a$ est la rugosité moyenne arithmétique de ladite surface, pour lui conférer un état de surface poli.

La couche de vernis présente avantageusement un indice de réfraction sensiblement égal à celui de la lentille avec une tolérance de 0,01.

Le brevet indique que la couche de vernis déposée sur la surface de la lentille et la lentille forment un seul dioptre, cette lentille répondant alors aux exigences du point de vue cosmétique puisqu'elle ne présente pas d'une part d'irisation visible à l'interface substrat-vernis et d'autre part de défauts observables en transmission, à la lampe à arc.

La couche de vernis est déposée directement sur la surface usinée, les étapes de doucissage et de polissage étant alors supprimées, ou bien après l'étape de doucissage.

Cependant, il s'avère que cette technique ne donne pas encore totale satisfaction au regard de la suppression des défauts optiques engendrés par des rayures de surfaçage.

Par ailleurs, elle présente au moins deux inconvénients.

Tout d'abord, les épaisseurs préconisées pour les revêtements sont élevées, et il est toujours difficile de maîtriser de tels dépôts.

Ensuite, comme indiqué précédemment, la technique décrite dans le brevet WO-01167139 nécessite d'utiliser un vernis qui présente un indice de réfraction pratiquement identique à celui du substrat.

Un premier but de la présente invention est donc de fournir un nouveau procédé rapide permettant d'obtenir un article transparent, notamment une lentille, de très bonne qualité optique, en particulier exempt de rayures de surfaçage visibles.

Un second but de la présente invention est de fournir un procédé utilisant un revêtement de masquage des rayures de surfaçage, et dont l'indice de réfraction peut être significativement différent de celui du substrat, de sorte qu'il n'est pas nécessaire d'adapter l'indice de réfraction du revêtement de masquage au substrat de la lentille.

Un troisième but de la présente invention est de fournir un nouveau procédé utilisant un revêtement de masquage permettant l'obtention d'un article transparent, notamment d'une lentille ophtalmique, exempt de rayures de surfaçage visibles et de franges d'interférence visibles, tout en possédant l'ensemble des propriétés requises pour des articles d'optique et notamment pour une lentille, à savoir un faible indice de jaune, une bonne résistance aux chocs, à l'abrasion, une bonne adhésion des revêtements fonctionnels déposés, et une bonne tenue des propriétés dans le temps.

Les buts ci-dessus sont atteints selon l'invention par un procédé d'obtention d'un article transparent exempt de raies de surfaçage visibles comprenant :

- l'obtention d'un substrat en un matériau transparent d'indice de réfraction $n_s$, dont au moins une face principale a été ébauchée et polie à une valeur de $R_a$ variant de 0,001 à 0,01 $\mu$m mais qui présente des défauts de surface visibles sous la forme de fines rayures individualisées de section transversale, de préférence en forme de coin ;
- le dépôt directement sur la face principale ébauchée et polie du substrat d'une composition liquide, polymérisable, de revêtement de masquage présentant un angle de contact avec la surface principale du substrat d'au plus 30°, et formant par polymérisation un revêtement de masquage ayant un indice de réfraction $n_c$ tel que $0,01 < |n_s-n_c| \leq 0,15$, de préférence $0,05 \leq |n_s-n_c| \leq 0,15$, et une épaisseur inférieure à 10 $\mu$m ;

- la polymérisation de la composition de revêtement de masquage ; et
- la récupération de l'article transparent dont la face principale ébauchée et polie du substrat est directement revêtue par le revêtement de masquage, et qui est exempt de fines rayures de surfaçage visibles.

La méthode de mesure des défauts de surface visibles (raies, rayures superficielles) observables en transmission sera décrite par la suite de façon détaillée.

Dans la présente description et les revendications, sauf indication contraire, les indices de réfraction sont déterminés à la température de 25°C à la longueur d'onde de 550 nanomètres.

Dans des cas spécifiés, on mesure $n_e$ (mercure 546.1 nm) et $n_D$ (sodium 589.3 nm) (à 25°C).

La présente invention concerne également un article, notamment un article d'optique, plus particulièrement une lentille ophtalmique et mieux un verre de lunette, comprenant un substrat en matériau transparent d'indice de réfraction $n_s$, dont au moins une face principale a une valeur de $R_a$ variant de 0,001 à 0,01 $\mu$m et présente des défauts de surface sous la forme de fines rayures individualisées, de préférence de section transversale en forme de coin, et un revêtement de masquage transparent d'indice de réfraction $n_C$, d'épaisseur inférieure à 10$\mu$m recouvrant directement ladite surface principale du substrat, les indices de réfraction $n_s$ et $n_c$ satisfaisant la relation $0,01 < |n_s-n_c| \leq 0,15$.

La suite de la description se réfère aux figures annexées qui représentent, respectivement :

Figure 1 : une microphotographie au microscope électronique à balayage montrant la morphologie d'une fine rayure individualisée sur une face d'un substrat ; et

Figure 2 : une représentation schématique de la section transversale d'une fine rayure individualisée.

Figure 3 : une coupe transversale du dispositif de mesure visuelle des défauts de surface d'une lentille ophtalmique, ainsi que le schéma de principe de la mesure.

Figure 4 : la zone d'inspection d'une lentille ophtalmique, lorsque la lentille ophtalmique est correctement disposée dans le dispositif de mesure visuelle pour assurer son observation par le porteur.

Les substrats en matériau transparent mis en oeuvre dans le procédé de l'invention sont des substrats dont au moins une face principale a été soumise à un surfaçage, et plus particulièrement des substrats dont au moins une face principale a subi uniquement un ébauchage et un polissage, comme c'est en particulier le cas lorsqu'on utilise les machines de type CNC.

Après le surfaçage, la face principale obtenue après polissage présente une rugosité moyenne arithmétique $R_a$ allant de 0,001 à 0,01 $\mu$m, mais présente des défauts de surface visibles, notamment à la lampe à arc, se présentant sous la forme de fines rayures individualisées, généralement de section transversale en forme de coin comme cela

apparaît sur la figure 1.

La rugosité moyenne arithmétique $R_a$ de la surface polie est mesurée sur une aire rectangulaire de 0,6mm x 0,8mm à l'aide d'un microscope interférométrique.

Par fines rayures individualisées, on entend des raies apparaissant sur la face principale du substrat, de longueur variable, mais clairement distinctes les unes des autres.

Ces raies peuvent comporter une section transversale dont la forme générale est représentée schématiquement à la figure 2.

La fine rayure représentée dans la figure 2, a la forme d'un coin matérialisé par une section transversale de forme générale triangulaire, est ouverte au niveau de la face principale du substrat et possède deux parois latérales convergentes se prolongeant à l'intérieur du substrat jusqu'à une arête matérialisée par le sommet S sur la figure 2.

La largeur L de l'ouverture de cette fine rayure au niveau de la face principale de substrat varie par exemple de 0,5 à 4μm et ces fines rayures ont une profondeur H, de la face principale du substrat jusqu'au sommet S, variant par exemple de 0,5 à 2μm.

Comme on le voit sur la figure 1 et comme schématisé sur la figure 2, une fine rayure possible pour le substrat a des parois latérales comprenant, à partir de la face principale du substrat, une première portion de surface courbe qui se prolonge par une seconde portion sensiblement plane jusqu'à l'arête (matérialisée par le sommet S) de la rayure.

La longueur de ces fines rayures varie en général de 2 nm à 3 cm, le plus souvent de 3 nm à 2cm.

En général, l'occurrence des fines rayures individualisées sur la face principale du substrat ne présente pas de caractère périodique, le plus souvent elles sont réparties de manière concentrique à la face principale du substrat.

En général, l'indice de réfraction $n_s$ du matériau du substrat est $\geq$ 1,60, de préférence $\geq$ 1,65, mieux est $\geq$ 1,70.

Le matériau du substrat peut-être tout matériau solide transparent minéral ou organique, notamment tout matériau classiquement utilisé pour la réalisation d'articles d'optique, telles que des lentilles ophtalmiques, et notamment des verres de lunette.

De préférence, le matériau du substrat est un verre organique, c'est-à-dire un matériau dont les constituants principaux sont des homo et copolymères ou des mélanges de ces homo et copolymères.

Parmi les substrats en verre organique convenant pour la présente invention, on peut citer les substrats en polycarbonate (PC), les substrats obtenus par polymérisation et copolymérisation des (méth)acrylates d'alkyle, en particulier des (méth)acrylates d'alkyle en $C_1$ $C_4$, et (méth) acrylates aromatiques polyéthoxylés tels que les bisphénolates diméthacrylates polyéthoxylés, les dérivés tels que les allylcarbonates de polyols aliphatiques ou aromatiques, linéaires ou ramifiés, les thio(méth)acrylates (c'est-à-dire des composés comprenant au moins 1, de préférence 2 groupements -S C(O) CH(R)= $CH_2$ ou R = H ou $CH_3$) et en particulier les thio(méth)acrylates d'alkyle, notamment en $C_1$ à $C_4$, les polymères et copolymères de polythiouréthanes, les polymères et copolyméres de polyépisulfures, et les alliages de ces polymères et copolymères.

Parmi les substrats obtenus par polymérisation des allylcarbonates de polyols, on peut citer ceux obtenus par polymérisation de l'éthylèneglycol bis-(allylcarbonate), le diethylèneglycol bis-(2-méthylcarbonate), le diéthylèneglycol bis-(allylcarbonate), le méthylèneglycol bis-(2-chloroallylcarbonate), le triéthylèneglycol bis-(allylcarbonate), le 1,3-propanediol bis-(allylcarbonate), le propylèneglycol bis-(2-ethylallylcarbonate), le 1,3-butylèneldiol bis-(allylcarbonate), le 1,4 butynediol bis-(2-bromoallylcarbonate), le dipropylèneglycol bis-(allylcarbonate), le triméthylèneglycol bis-(2-éthylallylcarbonate), le pentaéthylèneglycol bis-(allylcarbonate), l'isopropylène bisphénol-A bis (allylcarbonate).

Un copolymère d'allylcarbonate de polyol préféré est le copolymère du diéthylèneglycol bis-(allylcarbonate) vendu sous la dénomination commerciale CR39® par la société PPG INDUSTRIE.

Les matériaux préférés pour les substrats de l'invention sont les homo et copolymères de polythiouréthanes, des homo et copolymères de polysulfures, des homo et copolymères de polycarbonates, les homo et copolymères de polythio(méth)acrylates et leurs mélanges.

Parmi les matériaux à base de polythio(méth)acrylate on peut citer ceux obtenus par polymérisation des monomères thio(méth)acryliques tels que ceux décrits dans le brevet français FR-A-2 734 827.

Des homo et copolymères de polythiouréthanes convenant comme matériaux pour les substrats de la présente invention, sont décrits, entre autres, dans les brevets US-4,689,387, US-4,775,733, US-5,191,055, US-5,087,758 et la demande internationale WO 03/040205.

Les matériaux polythiouréthanes préférés selon l'invention sont ceux obtenus par réaction de polyaddition d'un polyisocyanate ou d'un polyisothiocyanate ayant 2 ou plus fonctions isocyanates ou isothiocyanates par molécule, de préférence 2 ou 3 fonctions isocyanates ou isothiocyanates et mieux 2 fonctions isocyanates ou isothiocyanates par molécule avec un composé polythiol ou polyol ayant 2 ou plus, de préférence 3 à 4, fonctions thiol ou hydroxyles par molécule.

Ces composés poly(thio)isocyanates et polyols ou polythiols peuvent être des monomères ou des prépolymères,comme cela est décrit en particulier dans la demande internationale WO 03/04 0205.

Parmi les monomères polyisocyanates ou isothiocyanates préférés, on peut citer ceux de formules :

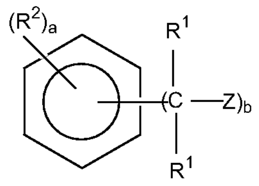

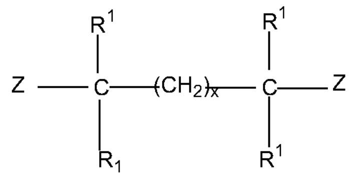

et

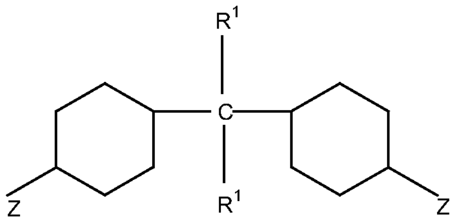

et

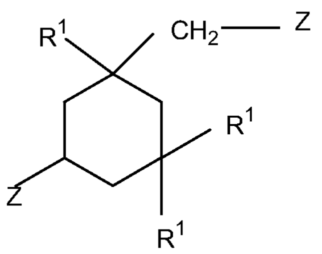

dans lesquelles

les groupes $R^1$ représentent, indépendamment les uns des autres, H ou un groupe alkyle en $C_1$-$C_5$, de préférence $CH_3$ ou $C_2H_5$ ;
$R^2$ représente H, un halogène, de préférence Cl ou Br, ou un groupe alkyle en $C_1$-$C_5$ de préférence $CH_3$ ou $C_2H_5$ ;
Z représente : -N=C=X
où X représente O ou S de préférence O ;
a est un entier de 1 à 4, b est un entier de 2 à 4 et a + b≤ 6 ;
et x est un entier de 1 à 10, de préférence de 1 à 6.

Parmi les monomères polyiso(thio)cyanates préférés on peut citer le tolylènediiso(thio)cyanate, le phénylènediiso(thio)cyanate, le méthylphénylènediiso(thio)cyanate, l'isopropylphénylène diiso(thio)cyanate, le diéthylphénylènediiso(thio)cyanate, le diisopropylphenylènediiso(thio)cyanate, le triméthylbenzyltriiso(thio)cyanate, le xylylènediiso(thio)cyanate, le benzyltriiso(thio)cyanate, le 4,4'-diphénylméthanediiso(thio)cyanate, le naphtalènediiso(thio)cyanate, l'isophoronediiso(thio)cyanate, le bis(iso(thio)cyanatométhyl)cyclohexane, l'hexaméthylène diiso(thio)cyanate et le dicyclohexylméthanediiso(thio)cyanate.
Le monomère polythiol peut être tout polythiol convenable ayant 2 ou plus, de préférence 3 ou 4 fonctions thiol.
Ces monomères polythiols peuvent être représentés par la formule :

$$R'(SH)_{n'}$$

dans laquelle n' est un entier de 2 à 6 et de préférence de 3 à 4, et R' est un groupe organique de valence égale à n'.

De tels monomères polythiols sont décrits, entre autres, dans la demande de brevet EP-1-394495 et les brevets US-4,775,733, US-5,087,758 et US-5,191,055.

Parmi les monomères polythiols on peut citer les polythiols aliphaltiques tels que le pentaérythritol tétrakis mercaptopropionate,

Le 1-(1'-mercaptoéthylthio)-2,3-dimercaptopropane, le 1-(2'-mercaptopropylthio)-2,3-dimercaptopropane, le 1-(3'-mercatopropyl-thio)-2,3-dimercaptopropane, le 1-(4'-mercaptobutylthio)-2,3-dimercaptopropane, le 1-(5'-mercaptopentylthio)-2,3-dimercaptopropane, le 1-(6'-mercaptohexylthio)-2,3-dimercaptopropane, le 1,2-bis-(4'-mercaptobutylthio)-3-mercaptopropane, le 1,2-bis-(5'-mercaptopentylthio)-3-mercaptopropane, le 1,2-bis-(6'-mercaptohexyl)-3-mercatopropane, le 1,2,3-tris-(mercaptomethylthio)propane, le 1,2,3-tris-(3'-mercapto-propylthio)propane, le 1,2,3-tris-(2'-mercaptoéthylthio)propane, le 1,2,3-tris-(4'-mercaptobutylthio)propane, le 1,2,3-tris-(6'-mercaptohexylthio)propane, le méthanedithiol, le 1,2-éthanedithiol, le 1,1-propanedithiol, le 1,2-propanedithiol, le 1,3-propanedithiol, le 2,2-propanedithiol, le 1,6-hexanethiol-1,2,3-propanetrithiol, et le 1,2-bis-(2'-mercaptoéthylthio)-3-mercaptopropane.

Parmi les polythiols, on peut encore citer les polythiols de formules :

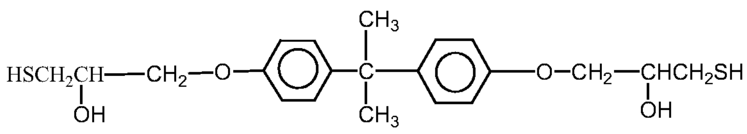

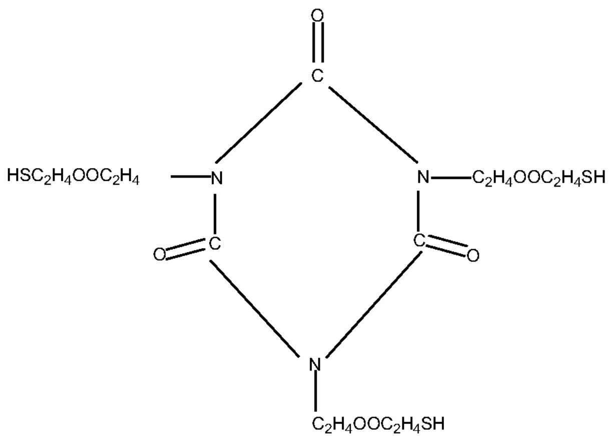

et

$$C_2H_5C(CH_2COOCH_2CH_2CH_2SH)_3$$

Les polythiols monomères préférés sont ceux répondant aux formules

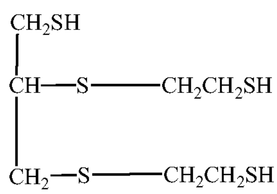

(polythiol A)

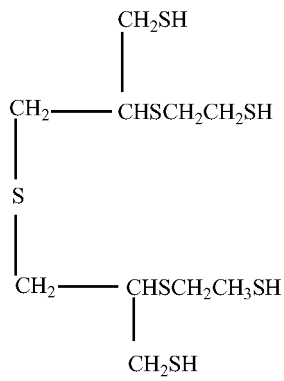

et tout particulièrement le polythiol A.

Les polyuréthanes préférés dans la présente invention sont ceux obtenus à partir de monomères diisocyanates et de polythiols, et tout particulièrement à partir de xylylènediisocyanate $C_6H_4$ $(CH_2NCO)_2$ (XDI) et de polythiol A.

Un matériau pour substrat à base de polyuréthane convenant particulièrement pour la présente invention est le matériau commercialisé sous la dénomination MR7 par la société MITSUI.

Une autre classe préférée de matériau pour le substrat de l'article d'optique transparent selon l'invention est constituée par les homo et copolymères de polyépisulfures, notamment de diépisulfures.

De tels homo et copolymères à base d'épisulfures sont décrits, entre autres, dans les brevets EP-761 665, EP-785 194, EP-874 016 et le brevet US-6 204 311.

Les composés épisulfures préférés pour les substrats sont les composés épisulfures comportant deux ou plus restes de formule :

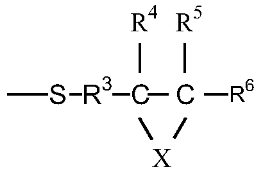

dans laquelle $R^3$ est un radical hydrocarboné divalent ayant 1 à 10 atomes de carbone, $R^4$, $R^5$ et $R^6$ représentent, indépendamment les uns des autres, H ou un radical hydrocarboné monovalent ayant 1 à 10 atomes de carbone, et X représente S ou O, le taux de S étant de 50% ou plus en moyenne par rapport au total d'atomes de S et O constitutifs des cycles à trois chaînons.

Les restes épisulfures préférés sont ceux de formule

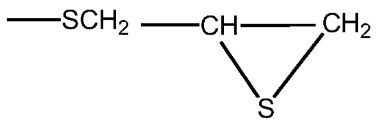

Les composés épisulfures particulièrement préférés répondent à la formule :

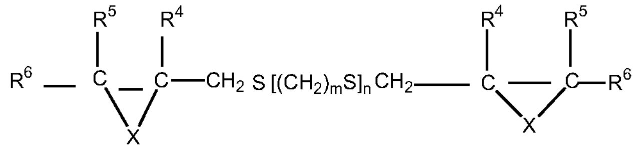

dans laquelle, $R^4$, $R^5$, $R^6$ et X sont tels que définis ci-dessus, m est un entier de 1 à 6 et n est un entier de 0 à 4, le taux de S étant de 50% ou plus en moyenne par rapport au total d'atomes de S et O constitutifs des cycles à trois chaînons.

Les matériaux à base de polyépisulfures préférés sont ceux qui résultent de la polymérisation ou copolymérisation de composés diépisulfures ayant au moins une liaison disulfure intramoléculaire.

Parmi les composés polyépisulfures on peut citer les composés suivants :

bis-(2,3-épithiopropyl)disulfure, bis-(2,3-épithiopropyldithio)méthane, bis-(2,3-épithiopropyldithio)éthane, bis-(6,7-épithio-3,4-dithiahéptane)sulfure, 1,4-dithiane-2,5-bis-(2,3-épithiopropyldithiométhyl), 1,3-bis-(2,3-épithiopropyldithiométhyl)benzène, 1,6-bis-(2,3-épithiopropyldithio)-2-(2,3-épithiopropyldithioéthylthio)-4-thiahexane, 1,2,3-tris-(2,3-épithiopropyldithio)propane, bis-(β-épithiopropylthio)méthane, 1,2-bis(β-épithiopropylthio)éthane, 1,3-bis-(β-épithiopropylthio)propane, 1,2-bis-(β-épithiopropylthio)propane, 1-(β-épithiopropylthio)-2-(β-épithiopropylthiométhyl)propane, 1,4-bis-(β-épithiopropylthio)butane, 1,3-bis-(β-épithiopropylthio)butane, 1-(β-épithiopropylthio)-3-(β-épithiopropylthiométhyl)butane, 1,5-bis-(β-épithiopropylthio)pentane, 1-(β-épithiopropylthio)-4-(β-épithiopropylthiométhyl)pentane, 1,6-bis-(β-épithio propylthio)hexane, 1-(β-épithiopropylthio)-5-(β-épithiopropylthiométhyl)hexane, 1-(β-épithiopropylthio)-2-[(β-épithiopropylthioéthyl)thio]éthane et 1-(β-épithiopropylthio)-2-[[2-(2-β-épithiopropylthioéthyl)thioéthyl]thio]éthane ; des composés organiques ramifiés tels que tétrakis-(β-épithiopropylthiométhyl)méthane, 1,1,1-tris-(β-épithiopropββylthiométhyl)propane, 1,5-bis-(β-épithiopropylthio)-2-(β-épithiopropylthiométhyl)-3-thiapentane, 1,5-bis-(β-épithiopropylthio)-2,4-bis(β-épithiopropylthiométhyl)-3-thiapentane, 1-(β-épithiopropylthio)-2,2-bis-(β-épithiopropylthiométhyl)-4-thiahexane, 1,5,6-tris-(β-épithiopropylthio)-4-(β-épithiopropylthiométhyl)-3-thiahexane, 1,8-bis-(β-épithiopropylthio)-4-(β-épithiopropylthiométhyl)-3,6-dithiaoctane, 1,8-bis-(β-épithiopropylthio)-4,5-bis-(β-épithiopropylthiométhyl)-3,6-dithiaoctane, 1,8-bis-(β-épithiopropylthio)-4,4-bis-(β-épithiopropylthiométhyl)-3,6-dithiaoctane, 1,8-bis-(β-épithiopropylthio)-2,4,5-tris-(β-épithiopropylthiométhyl)-3,6-dithiaoctane, 1,8-bis-(β-épithiopropylthio)-2,5-bis-(β-épithiopropylthiométhyl)-3,6-dithiaoctane, 1,9-bis-(β-épithiopropylthio)-5-(β-épithiopropylthiométhyl)-5-[(2-β-épithiopropylthioéthyl)thiométhyl]-3,7-dithianonane, 1,10-bis-(β-épithiopropylthio)-5,6-bis-[2,β-épithiopropylthioéthyl)thio]-3,6,9-trithiadécane, 1,11-bis-(β-épithiopropylthio)-4,8-bis-(β-épithiopropylthiométhyl)-3,6,9-trithiaundécane, 1,11-bis-(β-épithiopropylthio)-5,7-bis-(β-épithiopropylthiométhyl)-3,6,9-trithiaundécane, 1,11-bis-(β-épithiopropylthio)-5,7-[(2-β-épithiopropylthio)thiométhyl]-3,6,9-trithiadécane et 1,11-bis-(β-épithiopropylthio)-4,7-bis-(β-épithiopropylthiométhyl)-3,6,9-trithiaundecane ; et les composés obtenus en substituant au moins un atome d'hydrogène du groupe épisulfure dans les composés ci-dessus par un groupe méthyle, des composés cycloaliphatiques tels que 1,3- et 1,4-bis-(β-épithiopropylthio)cyclohexanes, 1,3- et 1,4-bis-(β-épithiopropylthiométhyl)cyclohexanes, bis-[4-(β-épithiopropylthio)cyclohexyl]méthane, 2,2-bis-[4-(β-épithiopropylthio) cyclohexyl]propane, bis-[4-(β-épithiopropylthio)cyclohexyl]sulfure 2,5-bis-(β-épithiopropylthioéthylthiométhyl)-1,4-dithiane et 2,5-bis-(β-épithiopropylthioéthylthiométhyl)- 1,4-dithiane et les composés obtenus en substituant au moins un atome d'hydrogène du groupe épisulfure dans les composés ci-dessus par un groupe méthyle, et les composés organiques aromatiques tels que 1,3- and 1,4-bis-(β-épithiopropylthio)benzènes, 1,3- et 1,4-bis-(β-épithiopropylthiométhyl)benzènes, bis-4-(β-épithiopropylthio) phényl]méthane, 2,2-bis-[4-(β-épithiopropylthio)phényl]propane, bis[4-(β-épithiopropylthio)phényl]sulfure, bis-[4-(β-épithiopropylthio)phényl]sulfone et 4,4'-bis-(β-épithiopropylthio)biphényle.

Le monomère diépisulfure préféré est le monomère de formule :

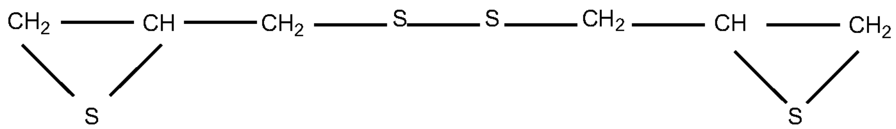

Un autre monomère diépisulfure particulièrement préféré est le monomère de formule

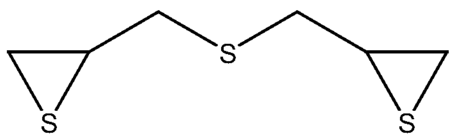

Par dépôt direct de la composition de revêtement de masquage, on entend le dépôt de la composition de revêtement de masquage sur une face principale ébauchée et polie n'ayant subi aucun traitement ou ayant subi un traitement, physique ou chimique, qui n'affecte pas sensiblement les fines rayures de surfaçage, c'est-à-dire qui n'affecte pas sensiblement la morphologie des rayures.

Parmi les traitements physiques que l'on peut utiliser, notamment pour accroître l'adhésion du revêtement de masquage au substrat, on peut citer les traitements classiques tels que les traitements par décharge couronne, les traitements par plasma ou les traitements par ultra-violet.

Parmi les traitements chimiques on peut citer des traitements classiques par des acides ou des bases, notamment les traitements par une solution d'hydroxyde de sodium. On peut également appliquer sur la face principale ébauchée et polie une mince couche d'un agent de couplage, d'épaisseur ≤ 5 nanomètres. De préférence, néanmoins,

l'article transparent exempt de raies de surfaçage visibles selon l'invention ne comporte pas de couche mince d'agent de couplage.

Les agents de couplage préférés sont des solutions précondensées d'un époxyalcoxysilane et d'un alcoxysilane insaturé, de préférence comprenant une double liaison éthylénique terminale. Ces agents de couplage sont plus spécifiquement décrits ci-après en liaison avec leur utilisation dans des compositions pour revêtement anti-abrasion.

Les compositions pour revêtement de masquage selon l'invention peuvent être toutes compositions liquides, polymérisables, notamment photopolymérisables et polymérisable thermiquement qui présentent un angle de contact avec la face principale du substrat d'au plus 30°, de préférence d'au plus 25° et mieux d'au plus 20°, formant par polymérisation un revêtement de masquage ayant un indice de réfraction $n_c$ tel que $0,01 < |n_s-n_c| \leq 0,15$, de préférence $0,05 \leq |n_s-n_c| \leq 0,15$, et supprimant toute visibilité de raies de surfaçage, notamment des fines rayures individualisées, pour une épaisseur de revêtement de masquage inférieure à 10µm.

De préférence, l'angle de contact de la composition de revêtement de masquage avec la face principale du substrat varie de 2 à 17°, mieux de 5 à 15°.

De préférence également le revêtement de masquage a une épaisseur de 1,5 à 8µm, de préférence de 2 à 5µm.

De préférence, la composition de revêtement de masquage est exempte de tout composé (méth)acrylate.

Les compositions de revêtement de masquage préférées sont des compositions à base de composés époxy, en particulier de composés diépoxy et en particulier des diglycidyléther d'alcanediols, tels que par exemple le diglycidyléther de butanediol, les diglycidyléthers de bisphénols, éventuellement halogénés et notamment bromés, notamment le diglycidyléthers de bisphénol-A et de bisphénol-F et le diglycidyléther de tétratromobisphénol-A et leurs mélanges.

Parmi les composés époxy préférés, on peut citer les composés époxy de formules suivantes et leurs mélanges :

| Nom | Structure chimique |
|---|---|
| DGEBA Diglycidyléther de bisphénol-A | 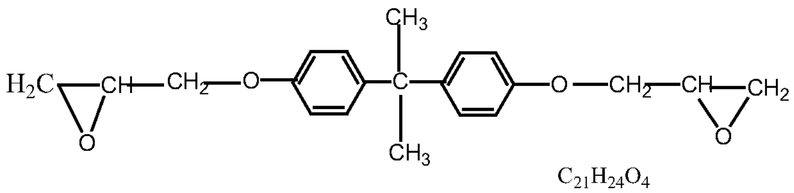<br>$C_{21}H_{24}O_4$<br>M=340 |
| DGEBF Diglycidyléther de bisphénol-F | 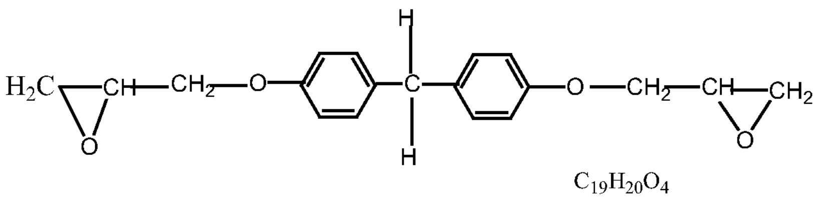<br>$C_{19}H_{20}O_4$<br>M=312 |
| Diglycidyléther de butanediol | 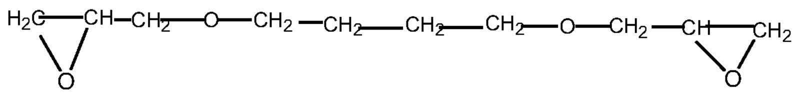 |
| Diglycidyléther de tétrabromo bisphénol-A | 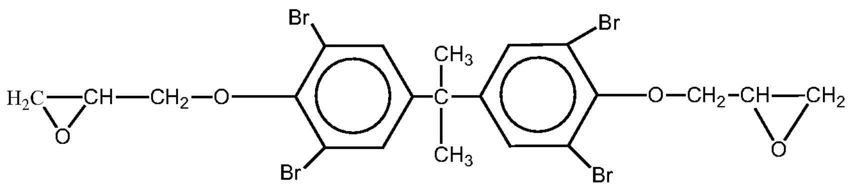<br>$C_{21}H_{20}O_4Br_4$<br>M=656 |

Les compositions pour revêtement de masquage de l'invention comportent en général un solvant de dilution ou un mélange de solvants de dilution pour régler la viscosité de la composition et la mouillabilité de la composition vis-à-vis de la face principale du substrat.

Les solvants convenant pour la formulation des compositions de masquage selon l'invention peuvent être choisis parmi tout solvant organique classique tels que les alcools, les esters, les cétones, le tétrahydropyrane et leurs

mélanges. On peut citer :

- méthanol ($CH_3OH$, Carlo Erba),
- 1-propanol ($CH_3CH_2CH_2OH$, VWR International),
- 1-méthoxy-2-propanol ($CH_3CH(OH)CH_2OCH_3$, Sigma Aldrich),
- 2-méthyl-2-butanol ($(CH_3)_2C(OH)CH_2CH_3$, Sigma Aldrich),
- butoxyéthanol ($CH_3(CH_2)_3OCH_2CH_2OH$, Sigma Aldrich),
- ou tous mélange de ces solvants.

On choisira de préférence le 4-hydroxy-4-méthyl-2-pentanone $(CH_3)_2C(OH)CH_2COCH_3$, VWR International) et l'éther glycol DOWANOL PM (Dow Chemical).

Les compositions pour revêtement de masquage, à l'état dilué, comprennent en général de 10% à 90% en masse par rapport à la masse totale de la composition diluée d'un ou plusieurs composés époxy, et de préférence de 30 à 60% en masse.

De préférence, les compositions pour revêtement de masquage selon l'invention comprennent également un ou plusieurs amorceurs, en particulier induisant une polymérisation cationique, notamment une photopolymérisation cationique, des compositions. Des exemples d'initiateurs cationiques sont les aromatiques et les complexes de sels arène de fer. Des photoinitiateurs appropriés sont décrits entre autres, dans les brevets US n°3 981 897, 4 058401, 4 101 513, 4 138 255, 4 161 471 et dans la demande internationale WO 94/10230.

Parmi les sels onium aromatiques photosensibles convenant pour les compositions de masquage selon l'invention, on peut citer les hexafluorophosphates et hexa antimonates d'arylsulfonium, le triphénylselenonium, et de bis(4-dodecilphényl)-iodionium. Des initiateurs cationiques sont commercialisés par la société CIBA GEIGY sous les noms commerciaux IRGACURE 261 et UVI 6974. Les initiateurs cationiques préférés sont les composés et mélanges de composés ayant les structures décrites ci-dessous :

| Structure chimique |
| --- |
| 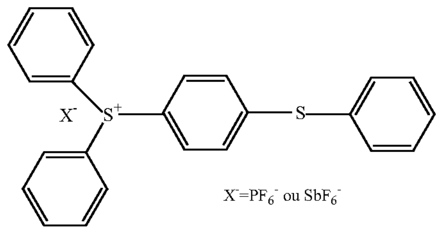 $X^- = PF_6^-$ ou $SbF_6^-$ |
| 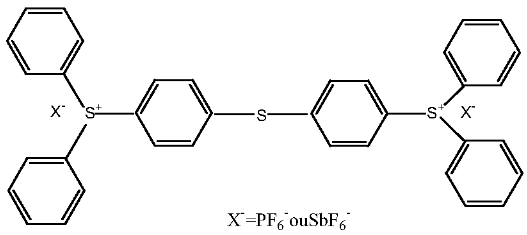 $X^- = PF_6^-$ ou $SbF_6^-$ |

En général, la quantité d'initiateur de polymérisation cationique présent dans les compostions pour revêtement de masquage selon l'invention varie de 0,1 à 5% en masse par rapport à la masse totale de la composition pour revêtement.

D'autres compositions de masquage préférées sont des compositions de type sol/gel, telles que des compositions à base d'hydrolysats d'époxysilane(s).

Les époxyalkoxysilanes préférés comportent un groupement époxy et trois groupements alkoxy, ces derniers étant directement liés à l'atome de silicium.

Un époxyalkoxysilane préféré peut être un alkoxysilane porteur d'un groupement β-(3,4- époxycyclohexyle), tel que le β-(3,4-epoxycyclohexyl)éthyltriméthoxysilane.

Les époxyalkoxysilanes particulièrement préférés répondent à la formule (I) :

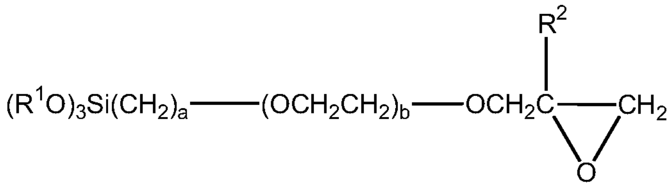

(I)

dans laquelle :

$R^1$ est un groupement alkyle de 1 à 6 atomes de carbone, préférentiellement un groupement méthyle ou éthyle,
$R^2$ est un groupement méthyle ou un atome d'hydrogène,
a est un nombre entier de 1 à 6,
b représente 0, 1 ou 2.

Des exemples de tels époxysilanes sont le γ-glycidoxypropyl-triéthoxysilane ou le γ-glycidoxypropyltriméthoxysilane.

Les compositions pour revêtement de masquage selon l'invention peuvent également contenir des colloïdes, en particulier des colloïdes d'indice de réfraction élevé c'est-à-dire un indice $n_D^{25} \geq 1,54$ et plus particulièrement des colloïdes d'oxyde métallique tels que des colloïdes de $SiO_2$, $TiO_2$, $ZrO_2$, $SnO_2$, $Sb_2O_3$, $Y_2O_3$, $Ta_2O_5$ et leurs mélanges.

Les colloïdes préférés sont $SiO_2$, $TiO_2$, $ZrO_2$ et leurs mélanges. Les particules préférées sont des particules composites à base des oxides suivants $SiO_2/TiO_2$, $SiO_2/ZrO_2$ et $SiO_2/TiO_2/ZrO_2$. De préférence, $TiO_2$ est sous forme rutile.

Un colloïde tout particulièrement préféré est un colloïde minéral choisi parmi les colloïdes de composites de TiO2/SiO2/ZrO2/SnO2 dans lesquelles TiO2 a une structure cristallographique rutile.

De tels colloïdes sont disponibles auprès de la société Catalysts and Chemical.

Des particules composites particulièrement recommandées sont décrits dans les brevets EP730168, JP11310755, JP200204301, JP2002363442.

De préférence, les compositions pour revêtement de masquage ne comportent pas de $TiO_2$ sous forme anatase et ne constituent pas de vernis à base de γ-glycidoxypropyle triméthoxysilane contenant un colloïde minéral choisi parmi le $TiO_2$ ayant une structure cristallographique anatase et les colloïdes composites $TiO_2/ZrO_2/SiO_2$ dans lesquelles $TiO_2$ a une structure cristallographique anatase.

En général, les particules de colloïdes ont une taille variant de 10 à 80 nm, de préférence de 10 à 30 nm.

En particulier, l'oxyde minéral peut être constitué d'un mélange de particules de petite taille, c'est-à-dire 10 à 15 nm et de particules de grande taille, c'est-à-dire 30 à 80nm.

Dans le cas d'un mélange d'oxydes minéraux colloïdaux, de préférence, le mélange comprend au moins un oxyde de bas indice (<1,54), le rapport pondéral oxyde de bas indice/oxyde haut indice variant en général de 20/80 à 80/20, de préférence 30/70 à 70/30 et mieux de 40/60 à 60/40.

Typiquement, les compositions pour revêtement de masquage selon l'invention peuvent comporter de 5% à 50% en masse de colloïdes.

La composition de revêtement de masquage est déposée par centrifugation (spin coating) ou par trempé (dip coating).

De préférence, le procédé de l'invention comporte également des étapes de formation sur le revêtement de masquage d'un ou plusieurs revêtement fonctionnels, c'est-à-dire des revêtements conférant à l'article diverses propriétés avantageuses tant optiques que mécaniques, telles que résistance au choc, résistance à l'abrasion, élimination des reflets, etc ...

Ainsi, généralement on peut revêtir le revêtement de masquage soit directement avec une couche résistant à l'abrasion, soit avec une couche de primaire, améliorant la résistance au choc de l'article, sur laquelle on peut déposer une couche résistante à l'abrasion, la couche de primaire améliorant également l'ancrage de cette couche résistant à l'abrasion. On peut encore déposer sur la couche résistant à l'abrasion un revêtement anti-reflets et enfin on peut également revêtir ce revêtement anti-reflet d'un revêtement anti-salissures hydrophobe et oléophobe.

La couche de revêtement de masquage, de primaire ou de revêtement anti-abrasion peut contenir différents types d'additifs tels que des absorbeurs UV, des pigments, des pigments photochromiques.

Dans le cas où l'on veut conférer des propriétés photochromiques à la lentille ophtalmique finale, le mode de réalisation préférentielle de l'invention est de déposer le revêtement de masquage sur le substrat, puis un primaire polyuréthane renfermant un pigment photochromique sur le revêtement de masquage.

La couche de primaire, lorsqu'elle est présente, peut être toute couche de primaire classiquement utilisé dans le domaine optique et en particulier ophtalmique.

Typiquement, ces primaires, en particulier les primaires anti-choc, sont des revêtements à base de polymères (méth)acryliques, de polyuréthanes, de polyesters, ou encore à base de copolymères époxy/(méth)acrylate.

Les revêtements anti-chocs à base de polymère (méth) acrylique sont, entre autres, décrits dans les brevets US 5,015,523 et US 5,619,288, cependant que des revêtements à base de résines de polyuréthane thermoplastiques et réticulées sont décrits, entre autres, dans les brevets japonais 63-141001 et 63-87223, le brevet européen EP-040411 et le brevet US-5,316,791.

En particulier, le revêtement de primaire résistant au choc de l'invention peut être réalisé à partir d'un latex poly(méth)acrylique, y compris de type coque-noyau (core-shell) tel que décrit, par exemple, dans la demande de brevet français FR 2.790.317, d'un latex de polyuréthane ou d'un latex de polyester.

Parmi les compositions de revêtement de primaire anti-choc particulièrement préférées, on peut citer le latex acrylique commercialisé sous la dénomination A-639 par Zeneca et les latex de polyuréthane commercialisés sous les dénominations W-240 et W-234 par la Société Baxenden.

On choisira de préférence des latex ayant une taille de particule $\leq$ 50 nm et mieux $\leq$ 20nm.

Les latex particulièrement préférés sont les latex de polyuréthane.

Généralement, après durcissement, la couche de primaire résistant au choc a une épaisseur de 0,05 à 20 $\mu$m, de préférence de 0,5 à 10 $\mu$m et mieux encore de 0,6 à 6 $\mu$m. L'épaisseur optimale est généralement de 0,5 à 2 $\mu$m.

Généralement, la couche de primaire a un indice de réfraction variant de 1,47 à 1,55 et préférentiellement de 1,51 à 1,53.

La formation du revêtement primaire antichocs (latex) comprend le dépôt d'un latex sur le revêtement de masquage et le durcissement au moins partiel, du latex.

Le revêtement anti-abrasion peut être tout revêtement anti-abrasion classiquement utilisé dans le domaine de l'optique et en particulier de l'optique ophtalmique.

Par définition, un revêtement anti-abrasion est un revêtement qui améliore la résistance à l'abrasion de l'article d'optique fini comparé au même article ne comportant pas le revêtement anti-abrasion.

Les revêtements anti-abrasion préférés sont ceux obtenus par durcissement d'une composition incluant un ou plusieurs époxyalcoxysilanes ou un hydrolysat de ceux-ci, de la silice et un catalyseur de durcissement. Des exemples de telles compositions sont décrits dans la demande internationale WO 94/10230 et les brevets US 4,211,823, 5,015,523, ainsi que le brevet européen EP 614957.

Les compositions de revêtement anti-abrasion particulièrement préférées sont celles comprenant comme constituants principaux un époxyalcoxysilane tel que, par exemple, le $\gamma$-glycidoxypropyltriméthoxysilane (GLYMO), un dialkyldialcoxysilane tel que, par exemple, le diméthyldiéthoxysilane (DMDES), de la silice colloïdale et une quantité catalytique d'un catalyseur de durcissement tel que l'acétylacétonate d'aluminium ou un hydrolysat de ces constituants, le reste de la composition étant essentiellement constitué de solvants classiquement utilisés pour formuler ces compositions et éventuellement d'un ou plusieurs agents tensionactifs.

Pour améliorer l'adhérence du revêtement anti-abrasion, la composition de revêtement anti-abrasion peut éventuellement comporter une quantité effective d'un agent de couplage.

Cet agent de couplage est typiquement une solution pré-condensée d'un époxyalcoxysilane et d'un alcoxysilane insaturé, de préférence comprenant une double liaison éthylènique terminale.

Des exemples d'époxyalcoxysilanes sont :

le $\gamma$-glycidoxypropyltriméthoxysilane,
le $\gamma$-glycidoxypropylpentaméthyldisiloxane,
le $\gamma$-glycidoxypropylméthyldiisopropènoxysilane,
le $\gamma$-glycidoxypropyl)méthyldiéthoxysilane,
le $\gamma$-glycidoxypropyldiméthoxyéthoxysilane,
le $\gamma$-glycidoxypropyldiisopropyléthoxysilane et le
$\gamma$-glycidoxypropyl)bis(triméthylsiloxy)méthylsilane.

L'époxyalcoxysilane préféré est le
($\gamma$-glycidoxypropyl)triméthoxysilane.

L'alcoxysilane insaturé peut être un vinylsilane, un allylsilane, un silane acrylique ou méthacrylique.

Des exemples de vinylsilanes sont :

le vinyltris(2-méthoxyéthoxy)silane,
le vinyltris isobutoxysilane,
le vinyltri-t-butoxysilane,

le vinyltriphénoxysilane,
le vinyltriméthoxysilane,
le vinyltriisopropoxysilane,
le vinyltriéthoxysilane,
le vinyltriacétoxysilane,
le vinylméthyldiéthoxysilane,
le vinylméthyldiacétoxysilane,
le vinyl bis(triméthylsiloxy)silane et le vinyldiméthoxysilane.

Des exemples d'allylsilanes sont l'allyltriméthoxysilane, l'allyltriéthoxysilane et l'allyltris(triméthylsiloxy)silane.
Des exemples de silanes acryliques sont :

le 3-acryloxypropyltris(triméthylsiloxy)silane,
le 3-acryloxypropyltriméthoxysilane,
l'acryloxypropylméthyl-diméthoxysilane,
le 3-acryloxypropylméthylbis(triméthylsiloxy)silane,
le 3-acryloxypropyldiméthylméthoxysilane,
le n-(3-acryloxy-2-hydroxypropyl)-3-aminopropyltriéthoxysilane.

Des exemples de silanes méthacryliques sont :

le 3-méthacryloxypropyltris(vinyldiméthoxylsiloxy)silane,
le 3-méthacryloxypropyltris(triméthylsiloxy)silane,
le 3-méthacryloxypropyltris(méthoxyéthoxy)silane,
le 3-méthacryloxypropyltriméthoxysilane,
le 3-méthacryloxypropylpentaméthyl disiloxane,
le 3-méthacryloxypropylméthyldiméthoxysilane,
le 3-méthacryloxypropylméthyldiéthoxysilane,
le 3-méthacryloxypropyldiméthyl méthoxysilane,
le 3-méthacryloxypropyldiméthyléthoxysilane,
le 3-méthacryloxypropènyltriméthoxysilane,
et le 3-méthacryloxypropylbis(triméthylsiloxy)méthylsilane.

Le silane préféré est l'acryloxypropyltriméthoxysilane.
Typiquement, la quantité d'agent de couplage introduite dans la composition de revêtement anti-abrasion représente 0,1 à 15 % en poids du poids total de la composition, de préférence 1 à 10 % en poids.
L'épaisseur du revêtement anti-abrasion, après durcissement, est habituellement de 1 à 15 $\mu$m, de préférence de 2 à 6 $\mu$m.
Les compositions de primaire anti-choc et de revêtement anti-abrasion peuvent être durcies thermiquement et/ou par irradiation, de préférence thermiquement.
Les couches de primaire anti-choc et de revêtement anti-abrasion peuvent être formées par tout procédé classique tel que par dépôt au trempé ou par centrifugation, de préférence par centrifugation. De ce fait, les compositions pour la formation de ces couches sont de préférence des compositions sol-gel.
Le procédé de l'invention peut comporter éventuellement le dépôt d'un revêtement anti-reflets sur la couche de revêtement anti-abrasion.
Le revêtement anti-reflets peut être tout revêtement anti-reflets classiquement utilisé dans le domaine de l'optique, en particulier de l'optique ophtalmique.
A titre d'exemple, le revêtement anti-reflets peut être constitué d'un film mono- ou multicouche, de matériaux diélectriques tels que SiO, $SiO_2$, $Si_3N_4$, $TiO_2$, $ZrO_2$, $Al_2O_3$, $MgF_2$ ou $Ta_2O_5$, ou leurs mélanges.
Il devient ainsi possible d'empêcher l'apparition d'une réflexion à l'interface lentille-air.
Ce revêtement anti-reflets est appliqué généralement par dépôt sous vide selon l'une des techniques suivantes :
Par évaporation, éventuellement assistée par faisceau ionique.
Par pulvérisation par faisceau d'ion.
Par pulvérisation cathodique.
Par dépôt chimique en phase vapeur assistée par plasma.
Outre le dépôt sous vide, on peut aussi envisager un dépôt d'une couche minérale par voie sol-gel (par exemple à partir d'hydrolysat de tétraéthoxysilane).
Dans le cas où la pellicule comprend une seule couche, son épaisseur optique doit être égale à $\lambda/4$ ($\lambda$ est une

longueur d'onde comprise entre 450 et 650 nm).

Dans le cas d'un film multicouche comportant trois couches, on peut utiliser une combinaison correspondant à des épaisseurs optiques respectives λ/4, λ/2, λ/4 ou λ/4, λ/4, λ/4.

Dans une réalisation recommandée de l'invention, le procédé comprend la formation entre le revêtement de masquage et le revêtement primaire anti-choc, d'une ou plusieurs couches de revêtement anti-frange d'interférence, de préférence constituant chacune une lame quart d'onde dans le domaine allant de 400 à 700 nanomètres, de préférence 450 à 650 nanomètres.

Les caractéristiques optiques et géométriques d'une telle lame quart d'onde sont données par les relations suivantes :

$$n = (n_c \times n_p)^{1/2},$$

et

$$n.e=\lambda/4$$

ou n est l'indice de réfraction à 25°C pour la longueur d'onde λ = 550 nanomètres de la lame quart d'onde (longueur d'onde correspondant à la sensibilité maximum de l'oeil),
$n_c$ est l'indice de réfraction à 25°C pour la longueur d'onde λ = 550 nanomètres du revêtement de masquage, et
$n_p$ est l'indice de réfraction à 25°C pour la longueur d'onde λ = 550 nanomètres du revêtement primaire anti-choc directement en contact avec la lame quart d'onde.

En d'autres termes, l'indice n de la lame quart d'onde est la moyenne géométrique des indices des matériaux l'entourant.

La ou les couches de revêtement anti-franges formant lame ¼ d'onde comprennent de préférence au moins un oxyde minéral colloïdal généralement choisi parmi $SiO_2$, $TiO_2$, $ZrO_2$, $SnO_2$, $Sb_2O_3$, $Y_2O_3$, $Ta_2O_5$ et leurs mélanges. Les oxydes minéraux colloïdaux préférés sont $SiO_2$, $TiO_2$, $ZrO_2$ et les mélanges $SiO_2/TiO_2$ et $SiO_2/ZrO_2$.

Les silices colloïdales préférées sont les silices préparées par le procédé Stöber. Le procédé Stöber est un procédé simple et bien connu qui consiste en une hydrolyse et condensation du tétra silicate d'éthyle ($Si(OC_2H_5)_4$ ou TEOS) dans l'éthanol catalysées par de l'ammoniac. Le procédé permet d'obtenir une silice directement dans l'éthanol, une population de particules quasi monodispersée, une taille de particules réglable et une surface de particule ($SiO^-NH_4^+$).

Dans le cas d'un mélange d'oxydes minéraux colloïdaux, de préférence, le mélange comprend au moins un oxyde haut indice, c'est à dire ayant un indice de réfraction $n_D^{25} \geq 1,54$ et au moins un oxyde bas indice, c'est à dire ayant un indice de réfraction $n_D^{25} < 1,54$. De préférence, les mélanges d'oxydes minéraux sont des mélanges binaires, en particulier d'un oxyde bas indice et d'un oxyde haut indice. Généralement, le rapport pondéral oxyde bas indice / oxyde haut indice varie de 20/80 à 80/20, de préférence 30/70 à 70/30 et mieux de 40/60 à 60/40.

La taille des particules de l'oxyde minéral varie généralement de 10 à 80 nm, de préférence 30 à 80 nm et mieux de 30 à 60 nm.

En particulier, l'oxyde minéral peut être constitué d'un mélange de particules de petite taille, c'est à dire de 10 à 15 nm et de particules de grande taille, c'est à dire de 30 à 80 nm.

Typiquement, la couche ou chacune des couches d'oxyde minéral colloïdal a une épaisseur de 60 à 100 nm, de préférence de 70 à 90 nm, et mieux de 80 à 90 nm, étant entendu que cette épaisseur doit être aussi proche que possible de l'épaisseur théorique d'une lame quart d'onde, compte tenu des matériaux utilisés pour l'article d'optique, pour un résultat optimal d'atténuation des franges d'interférence.

Les couches d'oxyde minéral colloïdal contiennent de préférence généralement un matériau polymère qui ne nuit pas aux propriétés optiques de la lame quart d'onde finale et qui accroît la cohésion et l'adhérence des particules d'oxydes minéraux à la surface du revêtement de masquage.

Les liants sont généralement des matériaux analogues aux compositions de primaire anti-choc décrits ci-dessus.

Les liants préférés sont les latex de polyuréthane et les latex (méth)acryliques, tout particulièrement les latex de polyuréthane.

Le ou les liants peuvent être ajoutés en totalité ou en partie à la composition d'oxyde minéral colloïdal pour la formation du revêtement anti-franges ou ils peuvent provenir du comblement de la porosité d'une ou plusieurs couches d'oxydes minéraux par le matériau de la couche de primaire anti-choc déposée immédiatement après.

Ainsi on peut former sur le revêtement de masquage une ou plusieurs couches d'oxyde minéral colloïdal ayant une porosité d'au moins 40 % en volume et de préférence de l'ordre de 50 % en volume par rapport au volume total de la couche, en l'absence de liant, et avant comblement par le matériau polymérique de la couche de primaire ou une ou plusieurs couches d'oxyde minéral colloïdal contenant au moins un liant (par exemple 1 à 30%, de préférence 10 à 25% et mieux 10 à 20% en poids par rapport au poids sec d'oxydes minéraux de la couche) ayant de préférence une porosité d'au moins 25%, mieux d'au moins 30% en volume avant comblement pour le matériau polymère de la composition de revêtement primaire anti-choc.

Le dépôt de la couche d'oxyde minéral colloïdal sur le revêtement de masquage peut se faire par trempage dans un sol d'oxyde minéral colloïdal ou centrifugation du sol, de préférence par trempage.

Dans le cas du dépôt par trempage, l'épaisseur déposée est fonction de la teneur en matière sèche du sol, de la taille des particules et de la vitesse de démouillage (Loi de Landau-Levich). Ainsi, connaissant la composition du sol, la taille des particules, les indices de réfraction du revêtement de masquage et du revêtement primaire, on peut déterminer l'épaisseur voulue pour la couche d'oxyde minéral colloïdal et la vitesse de démouillage convenant pour l'obtention de l'épaisseur voulue.

Après séchage de la couche déposée, on obtient une couche d'oxyde minéral colloïdal poreuse d'épaisseur voulue. La porosité de la couche est un critère essentiel et doit être d'au moins 40 % en volume, de préférence d'au moins 50 % en volume en l'absence de liant et d'au moins 25 %, de préférence d'au moins 30 % en volume, en présence de liant. La porosité des couches peut être calculée à partir des indices de réfraction des couches mesurées par ellipsométrie.

Dans le cas d'une couche ne contenant pas de liant

La porosité de la couche d'oxyde minéral colloïdal poreuse est

$$p = \frac{Vp}{Vox + Vp}$$

où Vp est le volume des pores contenus dans la couche,
et Vox est le volume occupé par l'oxyde minéral dans la couche.

La porosité p de la couche est ici égale à la porosité en l'absence de liant.

On accède à la valeur de la porosité p à partir des indices de réfraction :

$n_m$ (mesuré par ellipsométrie) qui est l'indice de réfraction de la couche minérale poreuse,
$n_{ox}$ qui est l'indice de réfraction moyen des particules d'oxyde minéral (éventuellement mixtes si plusieurs oxydes sont utilisés).

et de la relation :

$$n_m^2 = p + n_{ox}^2 \ (1-p)$$

où p est la fraction volumique en pore, en supposant les pores remplis d'air et 1-p la fraction volumique d'oxyde minéral.

Les indices de réfraction sont déterminés à 25°C à la longueur d'onde de 632 nm.

Dans le cas d'une couche contenant un liant

La porosité p de la couche est calculée à partir des relations suivantes :

$$(1)\ n_m^2 = p + x_{ox}^2\ n_{ox}^2 + x_l\, n_l^2$$

où $n_{ox}$ est l'indice de réfraction de la couche d'oxyde minéral poreux, p, porosité de la couche $= \dfrac{Vp}{V\ total}$,

$x_{ox}$ représente la fraction volumique d'oxyde minéral dans la couche

$$x_{ox} = \frac{Vox}{V\ total} ,$$

$x_l$ représente la fraction volumique de liant dans la couche

$$x_l = \frac{Vl}{V\ total}$$

Vp, Vox, Vtotal représentent respectivement les volumes occupés par les pores (air), l'oxyde minéral, le liant et par la totalité de la couche,
$n_{ox}$ est l'indice de réfraction moyen des particules d'oxyde minéral,
$n_l$ est l'indice de réfraction du liant,

$$(2)\ p + x_l + x_{ox} = 1$$

$$(3)\quad \frac{x_l}{x_{ox}} = \frac{m_l}{m_{ox}} \times \left(\frac{d_{ox}}{d_l}\right)$$

$d_{ox}$ = densité de l'oxyde minéral,
$d_l$ = densité du liant,
$m_l$ = masse sèche du liant dans la couche,
$m_{ox}$ = masse sèche d'oxyde minéral dans la couche.

La porosité en l'absence de liant est par définition p' = p + $x_l$, c'est à dire la porosité que présenterait la couche si le volume de liant était occupé par de l'air.

On obtient les valeurs de p et de p' par mesure de n, par ellipsométrie, les indices $n_{ox}$ et $n_l$ étant connus par ailleurs et le ratio $\frac{m_l}{m_{ox}}$ étant fixé expérimentalement.

Les différents indices de réfraction sont déterminés à 25°C à la longueur d'onde de 632 nm.

Les exemples suivants illustrent la présente invention.

Dans les exemples, sauf indication contraire, tous les pourcentages sont exprimés en masse, et les indices de réfraction ont été mesurés à 25°C et avec une longueur d'onde $\lambda$ = 550 nanomètres.

Des lentilles ophtalmiques semi-finies sphériques, de base 6,75 (base=530/R en mm ou R est le rayon de courbure de la lentille) en matériau MR7 (à base de polythiouréthane) commercialisé par la société MITSUI d'indice de réfraction $n_D^{25}$ de 1,660, de puissance -6,00 dioptries, sont soumises à un traitement de surfaçage comme indiqué ci-après.

Le surfaçage qu'il soit en face concave ou bien convexe est effectué de la façon suivante :

- Usinage sur Machine SCHNEIDER HSC100. La finition est faite avec un outil Diamant mono-cristallin de rayon 2 mm, une rotation inférieure ou égale à 600 tr/min, une avance inférieure ou égale à 0.04 mm/tr, une profondeur de passe égale à 0.1 mm.

- Polissage sur machine SCHNEIDER CCP101. Le pad de polissage est en tissu floqué. L'abrasif est de l'alumine type POLILENS+. Pour la finition, l'outil tourne à 900 tr/min avec une pression d'air à l'intérieur du piston affichée à 1 bar.

La puissance finale des lentilles ophtalmiques après surfaçage est +6,00 dioptries, addition 3,50 dioptries.

On dépose ensuite différents revêtements sur les lentilles ébauchées et polies, comme indiquées dans le tableau 1 ci-dessous.

Dépôt de la composition de revêtement de masquage

La composition de revêtement de masquage est déposée par centrifugation (spin coating) sur la face convexe, lorsque la face convexe a été surfacée ou sur la face concave lorsque la face concave a été surfacée.
La vitesse de centrifugation est de 2300 tours/minute pour le dépôt de la composition de masquage M1, l'épaisseur obtenue est de 2,3 microns.

La vitesse de centrifugation est de 2500 tours /minute pour la composition de masquage M2, l'épaisseur obtenue étant de 2 microns.

Les revêtements de masquage sont durcis par une lampe fusion LH6- (bulbe D, V ou H)

La composition de masquage M1 est une composition constituée de 58% molaire de DGEBF(diglycidyléther de bisphenol-F) et 42% molaire de DEGBA(diglycidyl éther de bisphénol-A), diluée à 50% dans le 4-hydroxy-4-methyl-2-pentanone $(CH_3)_2C(OH)CH_2COCH_3$, VWR International.

La composition de masquage M2 est une composition constituée de DEGBA(diglycidyléther de bisphénol -A) dilué à 50% en poids dans le 4-hydroxy-4-methyl-2-pentanone $(CH_3)_2C(OH)CH_2COCH_3$ (HMP), VWR International

Constitution et caractéristiques des Compositions M1 et M2

| | Réactifs | | | | Propriétés | | |
|---|---|---|---|---|---|---|---|
| | Solvant HMP | DGEBF %molaire | DGEBA %molaire | Initiateur cationique** | $n_e$ | $n_d$ | $T_g$ |
| M1 | 50% en poids de DGEBF+ DGEBA | 58 | 42 | oui | 1,614 | 1,610 | 80° et 115°C |
| M2 | 50% en poids de DGEBA | -- | >95 | oui | 1,588 | 1,584 | 105°C |

DGEBF = Diglycidyléther de bisphénol - F
DGEBA = Diglycidyléther de bisphénol - A
** initiateur cationique : mélange de :

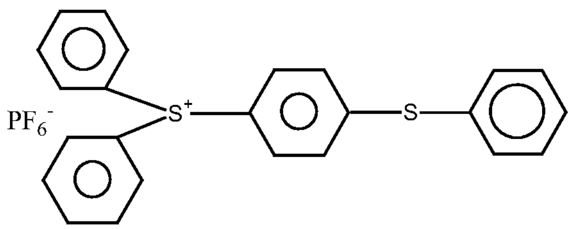

et

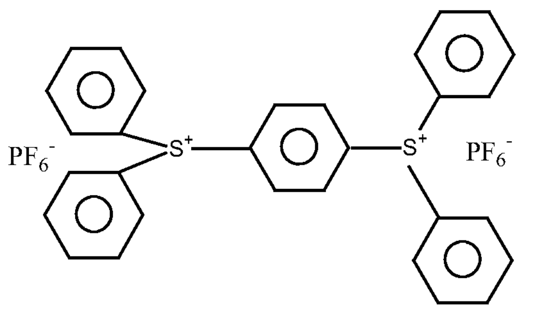

Dépôt de la couche anti-frange

On prépare une couche anti-frange d'indice final 1,580 et d'épaisseur 87 nm.

Une telle couche peut être préparée en suivant le mode opératoire des exemples 8 à 13 de la demande de brevet EP1362246.

Dépôt de la composition de primaire antichocs P1

Une fois le revêtement de masquage déposé et éventuellement la couche anti-frange, on immerge l'article pendant 4 minutes dans une composition de primaire P comprenant un latex de polyuréthane W234 de la Société BAXENDEN à 5° C. Après retrait, la couche de primaire est séchée à 80 °C pendant 20 minutes et on laisse refroidir pendant 15 minutes.

Dépôt de la composition anti-abrasion HC1

La lentille revêtue du primaire issu de la composition P est immergée pendant 4 minutes dans une composition pour revêtement anti-abrasion HC1 à 5° C.

Ensuite, on cuit la composition HC1.

On obtient ainsi un article ayant une couche de primaire et une couche de revêtement dur anti-abrasion sur ses deux faces.

La composition pour revêtement anti-abrasion HC1 a été préparée de la façon suivante :

On fait tomber goutte à goutte 80,5 parties de HCl 0,1 N dans une solution contenant 224 parties de GLYMO ($\gamma$-glycidoxy propyl triméthoxy silane) et 120 parties de DMDES (diméthyl diéthoxysilane).

La solution est agitée 24 heures à température ambiante, puis on ajoute 718 parties de silice colloïdale à 30% dans le méthanol, 15 parties d'acétylacétonate d'aluminium et 44 parties d'éthylcellosolve. On ajoute enfin une petite quantité d'agent tensio-actif.

L'extrait sec théorique de la composition HC1 renferme environ 13% de matière solide provenant du DMDES hydrolysé.

L'indice de réfraction du revêtement durci de la composition HC1 est de 1,49.

Dépôt du revêtement antiabrasion HC2

Le revêtement antiabrasion HC2 est un revêtement à indice de réfraction élevé (1,60) obtenu par durcissement d'une composition de revêtement à base d'hydrolysat de $\gamma$-glycidoxypropyl triméthoxysilane et de colloïde mixte de $TiO_2/ZrO_2/SiO_2$.

La présence de défauts optiques sur les lentilles ophtalmiques obtenues est ensuite évaluée selon le protocole décrit par la suite.

TABLEAU 1

| Exemple | Procédé de surfaçage | Revêtement de masquage | Indice du revêtement de masquage | Epaisseur du revêtement de masquage (μm) | Couche quart d'onde | Primaire antichocs et épaisseur | Revêtement antiabrasion | Nombre de verres testés | % de verres présentant des défauts optiques |
|---|---|---|---|---|---|---|---|---|---|
| Comparatif 1 | Surfaçage face convexe* | Aucun | -- | -- | Non | P 1 micron | HC1 3 microns | 30 | 100% |
| Comparatif 2 | Surfaçage face Convexe* | Aucun | -- | -- | Non | Non | HC2 2,2 microns | 110 | 60-90% |
| 1 | Surfaçage face convexe* | M1 | 1,61 | 2,3 | Non | P 1 micron | HC1 3 microns | 80 | <10% |
| 2 | Surfaçage face convexe* | M1 | 1,61 | 2,3 | Oui | P 1 micron | HC1 3 microns | 80 | <10% |
| 3 | Surfaçage face concave* | M2 | 1,59 | 2 | Oui | P 1 micron | HC1 3 microns | 24 | 0% |
| 4 | Surfaçage face concave* | M1 | 1,61 | 2,3 | Oui | P 1 micron | HC1 3 microns | 24 | 0% |

Verres progressifs+6,00 addition 3,50 Pad floqué fourni par la société Delamare
Liquide de polissage du type polispeed de la marque Ferro
L'angle de contact du primaire P avec le substrat MR 7 est de 42,7°

Exemples 5 et 6 : dépôt de compositions de revêtement présentant des angles de contact variables.

On prépare deux compositions de revêtement de masquage avec deux teneurs en solvant HMP 4-hydroxy-4-methyl-2-pentanone $(CH_3)_2C(OH)CH_2COCH_3$ différentes à partir de la composition M2 : une solution M3 (dilution de M2 à 70% en poids dans HMP) et une solution M4 (dilution à 30% en poids dans HMP) . Ceci permet de faire varier l'angle de contact de la formulation sur un substrat d'indice 1,67.

Dans un premier temps, les angles de contact des vernis M3 et M4 sur des lentilles ophtalmiques biplans 1,67 moulées ont été mesurés. Le protocole est le suivant :

L'appareil utilisé est un DIGIDROP de la société GBX Instrumentation Scientifique. Il s'agit d'un appareil de mesure automatique de l'angle de contact et de caractérisation du phénomène de mouillabilité. Le DIGIDROP est composé d'une caméra, d'un système d'analyse et de traitement d'images ainsi que d'un logiciel de mesures.

Un micro-régulateur de gouttes permet de déposer un volume précis de liquide de manière simple à l'aide du moniteur de contrôle vidéo. Le substrat est amené en contact avec le liquide manuellement ou de manière automatique ; l'influence des forces externes autres que les forces dues à la tension de surface sont éliminées. Le phénomène de mouillabilité peut donc être clairement identifié. L'optique du DIGIDROP constituée d'une caméra et d'un objectif macro restitue une image grossie et précise de la goutte, sans aberration. Le logiciel peut alors analyser l'image numérisée de la goutte et déterminer ses caractéristiques géométriques. L'angle de contact $\theta$, correspondant à l'angle entre la surface du solide et la tangente à la surface du liquide peut ainsi être déterminé.

Dans un deuxième temps, les revêtements de masquage M3 et M4 sont déposés par centrifugation (spin coating) sur la face surfacée convexe de lentilles ophtalmiques progressives en substrat MR7 d'indice de réfraction $n_D^{25}$ de 1,660, de géometrie +6,00 addition 3,50 obtenu par le procédé de surfaçage décrit précédemment pour les exemples 1 à 4. Afin que la viscosité des revêtements de masquage M3 et M4 n'influence pas les résultats de pouvoir recouvrant, un délai entre l'étape de dépôt par spin coating et de polymérisation UV est appliqué. L'épaisseur des revêtements après polymérisation des compositions est de 4 microns.

Après dépôt du primaire P et vernis anti-abrasif HC1, les défauts de surface des lentilles (raies, rayures superficielles) sont ensuite observées en transmission suivant le protocole décrit par la suite.

**TABLEAU II**

| Exemple | Revêtement De masquage | Angle de contact de la formulation sur une lentille ophtalmique biplan 1,67 | Epaisseur du revêtement de masquage | Primaire (épaisseur) | Revêtement antiabrasion (épaisseur) | Nombre de verres | Pouvoir recouvrant | |
|---|---|---|---|---|---|---|---|---|
| | | | | | | | nombre de verres présentant des défauts optiques | % de verres présentant des défauts optiques |
| 5 | M3 : M2 (70%) + HMP (30%) | 20° | 4μm | P (1 micron) | HC1 (3 microns) | 39 | 14 | 36% |
| 6 | M4: M2 (30%) + HMP(70%) | 9° | 4μm | P (1 micron) | HC1 (3 microns) | 34 | 5 | 15% |

Protocole de mesure des défauts optiques.

Le dispositif de mesure, qui est un dispositif de mesure en transmission, ainsi que le schéma de principe de la mesure, sont représentés en figure 3.

Le dispositif de mesure est constitué d'un réceptacle (3) aux parois opaques (4), comprenant une source lumineuse (5), de forme allongée, et une ouverture (6), en forme de fente, aménagée dans une direction parallèle à la source lumineuse (5).

La source lumineuse (5) est positionnée, de façon décalée par rapport à l'ouverture (6), de telle sorte que la presque totalité de la source lumineuse (5) est occultée pour un observateur (7) disposant son regard face à l'ouverture (6).

La lentille (8) dont on inspecte les défauts de surface est positionnée dans une zone d'observation (9), en face de l'ouverture (6), à une distance d'environ 200 mm par rapport à la source lumineuse (5), et de telle sorte que l'axe optique (non représenté) de cette lentille (8) soit parallèle à la direction (10) du regard de l'observateur (7). L'observateur effectuant la mesure possède une vision de 10/10 à chaque oeil et les yeux de l'observateur sont positionnés de telle sorte que ceux-ci se situent à une distance d'environ 500 mm du verre à observer.

L'observateur (7) et la lentille (8) sont correctement disposés lorsque l'observateur (7) perçoit dans son champ de vision la disposition représentée en figure 4.

La lentille (8) est placée devant l'ouverture (6) et orientée comme indiqué précédemment.

La zone d'inspection (10) est la zone délimitée, dans sa partie supérieure, par le bord (11) de la source lumineuse (5) vu au travers de la lentille (8), dans sa partie inférieure, par le bord inférieur (12) de l'ouverture (6), vu au travers de la lentille (8) et le bord (13) de la lentille (8).

La zone d'inspection (10) telle que représentée en figure 4 représente environ le tiers de la surface de la lentille (8).

La lentille (8) est ensuite translatée pour pouvoir visualiser l'ensemble de la surface optique dans la zone d'inspection.

La lumière ambiante de la salle dans laquelle s'effectue la mesure doit varier entre 60 et 130 lux.

La lumière au niveau de la zone d'observation (9) doit être comprise entre 600 et 1200 lux.

Une lentille (ou plus généralement l'article en matériau transparent de l'invention) est dit(e) exempt(e) de défaut de surface optique visible ou exempt(e) de raie de surfaçage visible si aucun défaut n'est visualisé par un observateur tel que défini précédemment et dans les conditions de mesures précitées dans le protocole, lors d'une inspection de la lentille effectuée pendant une durée comprise entre 4 et 8 secondes.

## Revendications

1. Procédé d'obtention d'un article transparent exempt de raies de surfaçage visibles, comprenant :

    - l'obtention d'un substrat en un matériau transparent d'indice de réfraction $n_s$, dont au moins une face principale a été ébauchée et polie à une valeur de Ra variant de 0,001 à 0,01 $\mu$m mais qui présente des défauts de surface visibles sous la forme de fines rayures individualisées ;
    - le dépôt directement sur la face principale ébauchée et polie du substrat d'une composition liquide, polymérisable, de revêtement de masquage présentant un angle de contact avec la face principale du substrat d'au plus 30°, et formant par polymérisation un revêtement de masquage ayant un indice de réfraction $n_c$ tel que $0,01 < |n_s - n_c| \leq 0,15$, de préférence $0,05 \leq |n_s-n_c| \leq 0,15$, et une épaisseur inférieure à 10 micromètres ;
    - la polymérisation de la composition de revêtement de masquage ; et
    - la récupération de l'article transparent dont la face principale ébauchée et polie du substrat est directement revêtue par le revêtement de masquage, et qui est exempt de fines rayures de surfaçage visibles.

2. Procédé selon la revendication 1, **caractérisé en ce que** les fines rayures individualisées présentent une section transversale en forme de coin.

3. Procédé selon la revendication 1 ou 2 dans lequel la face principale ébauchée et polie du substrat n'a pas subi d'étape de doucissage avant l'étape de polissage.

4. Procédé selon l'une quelconque des revendication 1 à 3, **caractérisé en ce que** l'occurrence des fines rayures individualisées ne présente pas de caractère périodique.

5. Procédé selon l'une quelconque des revendications 1 à 4, **caractérisé en ce que** les fines rayures individualisées sont réparties de manière concentrique sur la face principale du substrat.

6. Procédé selon l'une quelconque des revendications précédentes, **caractérisé en ce que** l'angle de contact de la composition de revêtement de masquage avec la face principale du substrat est d'au plus 25°, de préférence d'au

plus 20°.

7. Procédé selon l'une quelconque des revendications précédentes, **caractérisé en ce que** l'angle de contact de la composition de revêtement de masquage avec la face principale du substrat varie de 2° à 17°, de préférence de 5 à 15°.

8. Procédé selon l'une quelconque des revendications précédentes, caractérisé en ce le revêtement de masquage a une épaisseur de 1,5 à 8 micromètres, de préférence de 2 à 5 micromètres.

9. Procédé selon l'une quelconque des revendications précédentes, **caractérisé en ce que** la composition de revêtement de masquage comprend des composés époxy.

10. Procédé selon la revendication 9, **caractérisé en ce que** les composés époxy comportent au moins deux groupes époxy par molécule.

11. Procédé selon la revendication 10, **caractérisé en ce que** les composés époxy sont choisis parmi les diglycidyl éthers de bisphénols, les diglycidyl éthers d'alcanols et leurs mélanges.

12. Procédé selon la revendication 11, **caractérisé en ce que** les composés époxy sont choisis parmi les diglycidyléthers de bisphénol-A et F, les diglycidyléthers bromés de bisphénol A et F, le diglycidyléther de butanediol et leurs mélanges.

13. Procédé selon l'une quelconque des revendications précédentes, **caractérisé en ce que** la composition de revêtement de masquage est exempte de tout composé (méth)acrylate.

14. Procédé selon l'une quelconque des revendications précédentes, **caractérisé en ce que** la composition de revêtement de masquage est une composition photopolymérisable.

15. Procédé selon l'une quelconque des revendications précédentes, **caractérisé en ce qu'**elle comprend au moins un amorceur cationique.

16. Procédé selon l'une quelconque des revendications précédentes, **caractérisé en ce que** la composition de revêtement de masquage est déposée par centrifugation (spin coating) ou par trempé (dip coating).

17. Procédé selon l'une quelconque des revendications précédentes, **caractérisé en ce qu'**il comprend en outre une étape de formation d'un revêtement primaire anti-chocs sur le revêtement de masquage.

18. Procédé selon la revendication 17, **caractérisé en ce que** l'étape de formation du revêtement primaire antichocs comprend le dépôt d'un latex sur le revêtement de masquage et le durcissement au moins partiel, du latex.

19. Procédé selon la revendication 18, **caractérisé en ce que** le latex est choisi parmi les latex (méth)acryliques et les latex de polyuréthane, de préférence les latex de polyuréthane.

20. Procédé selon l'une quelconque des revendications 17 à 19, **caractérisé en ce qu'**il comprend une étape de formation d'un revêtement anti-frange d'interférence entre le revêtement de masquage et le revêtement primaire anti-chocs.

21. Procédé selon la revendication 20, **caractérisé en ce que** le revêtement anti-frange d'interférence constitue une lame quart d'onde.

22. Procédé selon l'une quelconque des revendications 17 à 21, **caractérisé en ce qu'**il comprend en outre une étape de formation d'un revêtement anti-abrasion sur le revêtement primaire anti-chocs.

23. Procédé selon l'une quelconque des revendications précédentes, **caractérisé en ce que** l'indice de réfraction $n_s$ du matériau du substrat est égal ou supérieur à 1,60, de préférence égal ou supérieur à 1,65, mieux égal ou supérieur à 1,70.

24. Procédé selon la revendication 23, **caractérisé en ce que** le matériau du substrat est choisi parmi les homo et

copolymères de polythiouréhane, les homo et coplymères de polyépisulfures, les homo et copolymères de polycarbonate, les homo et copolymères de polythio(méth)acrylates et leurs combinaisons, de préférence les homo et copolymères de polythiouréthane.

**25.** Procédé selon la revendication 24, **caractérisé en ce que** le matériau du substrat est un matériau à base de polythiouréthanes résultant de la polyaddition d'au moins un diisocyanate et d'au moins un polythiol.

**26.** Procédé selon la revendication 25, **caractérisé en ce que** le diisiocyanate est le xylylène diisocyanate ($C_6H_4(CH_2NCO)_2$.

**27.** Procédé selon la revendication 25 ou 26, **caractérisé en ce que** le(s) polythiol(s) est (sont) choisi(s) parmi les tri et tétrathiols.

**28.** Procédé selon la revendication 27, **caractérisé en ce que** les polythiols sont choisis parmi les composés de formules

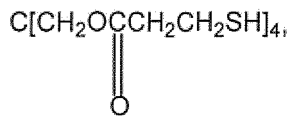

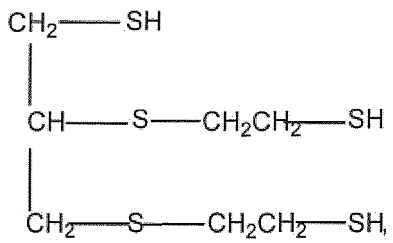

et

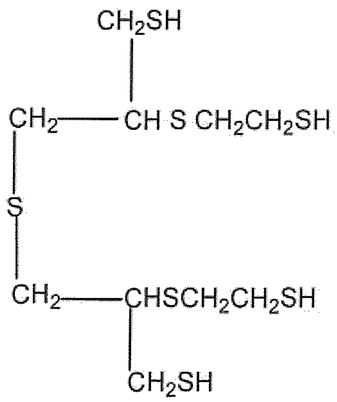

**29.** Procédé selon la revendication 25, **caractérisé en ce que** le matériau du substrat résulte de la polyaddition de xylylène diisocyanate et du polythiol de formule

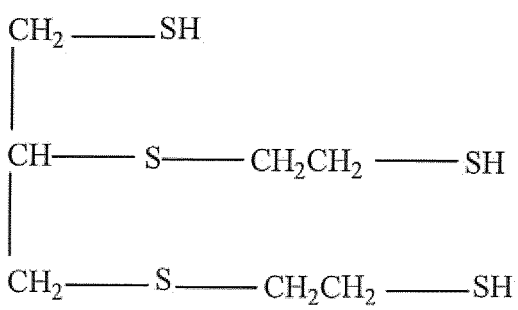

**30.** Procédé selon la revendication 24, **caractérisé en ce que** le matériau du substrat est un homo ou copolymère de polyépisulfure résultant de la polymérisation ou copolymérisation d'un diépisulfure de formule :

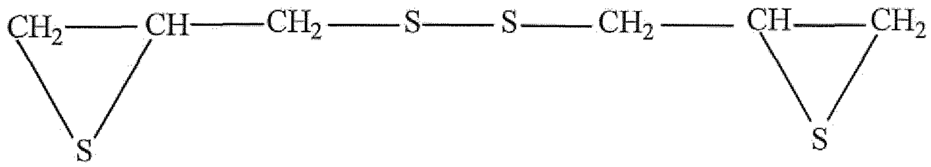

ou de formule

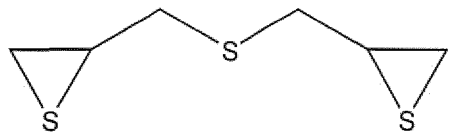

**31.** Procédé selon l'une quelconque des revendications précédentes, **caractérisé en ce qu'**il constitue un verre optique, de préférence une lentille ophtalmique.

**32.** Procédé selon l'une quelconque des revendications précédentes, **caractérisé en ce que** les fines rayures individualisées ont une profondeur, de la face principale du substrat jusqu'au sommet, variant de 0,5 μm à 2 μm.

**33.** Article comprenant un substrat en matériau transparent d'indice de réfraction $n_s$, dont au moins une face principale a une valeur de $R_a$ variant de 0,001 à 0,01 μm et présente des défauts de surface sous la forme de fines rayures individualisées, et un revêtement de masquage transparent, d'indice de réfraction $n_c$, d'épaisseur inférieure à 10μm recouvrant directement ladite face principale du substrat, les indices de réfraction $n_s$ et $n_c$ satisfaisant la relation $0{,}01 < |n_s - n_c| \leq 0{,}15$, de préférence $0{,}05 \leq |n_s - n_c| \leq 0{,}15$.

**34.** Article selon la revendication 33, **caractérisé en ce que** les fines rayures individualisées présentent une section transversale en forme de coin

**35.** Article selon la revendication 33 ou 34, **caractérisé en ce que** le revêtement de masquage ne comprend pas de vernis à base de γ-glycidoxy propyltriméthoxysilane contenant un colloïde minéral choisi parmi le $TiO_2$ ayant une structure cristallographique anatase et les mélanges $TiO_2/ZrO_2/SiO_2$ dans lesquels $TiO_2$ a une structure cristallographique anatase.

**36.** Article selon l'une quelconque des revendications 33 à 35, **caractérisé en ce que** l'occurrence des fines rayures individualisées ne présente pas de caractère périodique.

**37.** Article selon l'une quelconque des revendications 33 à 36, **caractérisé en ce que** les fines rayures individualisées sont réparties de manière concentrique à la surface principale du substrat.

**38.** Article selon l'une quelconque des revendications 33 à 37, **caractérisé en ce que** le revêtement de masquage a une épaisseur de 1,5 à 8 micromètres, de préférence de 2 à 5 micromètres.

**39.** Article selon l'une quelconque des revendications 33 à 38, **caractérisé en ce que** la composition de revêtement de masquage comprend des composés époxy.

**40.** Article selon la revendication 39, **caractérisé en ce que** les composés époxy comportent au moins deux groupes époxy par molécule.

**41.** Article selon la revendication 40, **caractérisé en ce que** les composés époxy sont choisis parmi les diglycidyl éthers de bisphénols, les diglycidyl éthers d'alcanols et leurs mélanges.

**42.** Article selon la revendication 41, **caractérisé en ce que** les composés époxy sont choisis parmi les diglycidyléthers de bisphénol-A et F, les diglycidyléthers bromés de bisphénol-A et F, le diglycidyléther de butanediol et leurs

mélanges.

**43.** Article selon l'une quelconque des revendications 33 à 42, **caractérisé en ce que** la composition de revêtement de masquage est exempt de tout composé (méth)acrylate.

**44.** Article selon l'une quelconque des revendications 33 à 43, **caractérisé en ce qu'**il comprend un revêtement primaire anti-chocs sur le revêtement de masquage.

**45.** Article selon la revendication 44, **caractérisé en ce que** le revêtement anti-chocs est constitué d'un latex durci choisi parmi les latex (méth)acryliques et de polyuréthanes, de préférence les latex de polyuréthane.

**46.** Article selon l'une quelconque des revendications 44 à 45, **caractérisé en ce qu'**il comprend un revêtement anti-franges d'interférence entre le revêtement de masquage et le revêtement primaire anti-chocs.

**47.** Article selon la revendication 46, **caractérisé en ce que** le revêtement anti-franges d'interférence constitue une lame quart d'onde.

**48.** Article selon l'une quelconque des revendications 44 à 47, **caractérisé en ce qu'**il comprend un revêtement anti-abrasion sur le revêtement primaire anti-chocs.

**49.** Article selon l'une quelconque des revendications 33 à 48, **caractérisé en ce que** l'indice de réfraction $n_s$ du matériau du substrat est égal ou supérieur à 1,60, de préférence égal ou supérieur à 1,65, mieux égal ou supérieur à 1,70.

**50.** Article selon l'une quelconque des revendications 33 à 49, **caractérisé en ce que** le matériau du substrat est choisi parmi les homo et copolymères de polythiouréthane, les homo et copolymères de polyépisulfures, les homo et copolymères de polycarbonate, les homo et copolymères de polythio(méth)acrylates et leurs combinaisons, de préférence les homo et copolymères de polythiouréthane.

**51.** Article selon l'une quelconque des revendications 33 à 50, **caractérisé en ce qu'**il constitue un verre optique, de préférence une lentille ophtalmique.

## Patentansprüche

**1.** Verfahren zur Herstellung eines transparenten Gegenstands ohne sichtbare Oberflächenbehandlungslinien, umfassend:

- Herstellen eines Substrats aus einem transparenten Material mit einem Brechungsindex $n_s$, wobei mindestens eine Hauptfläche von diesem roh bearbeitet und auf einen Wert Ra poliert wurde, der von 0,001 bis 0,01 $\mu$m variiert, die jedoch sichtbare Oberflächendefekte in der Form von einzelnen feinen Kratzspuren aufweist;
- direktes Abscheiden einer flüssigen, polymerisierbaren Zusammensetzung einer Maskierungsbeschichtung mit einem Kontaktwinkel mit der Hauptfläche des Substrats von höchstens 30° auf der roh bearbeiteten und polierten Hauptfläche des Substrats, und Bilden einer Maskierungsbeschichtung mit einem Brechungsindex $n_c$, so dass $0,01 < |n_s - n_c| \leq 0,15$, vorzugsweise $0,05 \leq |n_s - n_c| \leq 0,15$, und einer Dicke von weniger als 10 Mikrometern durch Polymerisation;
- Polymerisieren der Maskierungsbeschichtungszusammensetzung; und
- Erhalten des transparenten Gegenstands, wobei die roh bearbeitete und polierte Hauptfläche des Substrats von diesem direkt mit der Maskierungsbeschichtung beschichtet ist, und der keine sichtbaren feinen Oberflächenbehandlungskratzspuren aufweist.

**2.** Verfahren nach Anspruch 1, **dadurch gekennzeichnet, dass** die einzelnen feinen Kratzspuren einen Querschnitt in der Form eines Keils aufweisen.

**3.** Verfahren nach Anspruch 1 oder 2, wobei die roh bearbeitete und polierte Hauptfläche des Substrats vor dem Polierschritt keinem Schleifschritt unterzogen wurde.

**4.** Verfahren nach einem der Ansprüche 1 bis 3, **dadurch gekennzeichnet, dass** das Auftreten einzelner feiner Kratzspuren keinen regelmäßigen Charakter aufweist.

5. Verfahren nach einem der Ansprüche 1 bis 4, **dadurch gekennzeichnet, dass** die einzelnen feinen Kratzspuren konzentrisch auf der Hauptfläche des Substrats verteilt sind.

6. Verfahren nach einem der vorhergehenden Ansprüche, **dadurch gekennzeichnet, dass** der Kontaktwinkel der Maskierungsbeschichtungszusammensetzung mit der Hauptfläche des Substrats höchstens 25°, vorzugsweise höchstens 20°, beträgt.

7. Verfahren nach einem der vorhergehenden Ansprüche, **dadurch gekennzeichnet, dass** der Kontaktwinkel der Maskierungsbeschichtungszusammensetzung mit der Hauptfläche des Substrats von 2° bis 17°, vorzugsweise von 5° bis 15°, variiert.

8. Verfahren nach einem der vorhergehenden Ansprüche, **dadurch gekennzeichnet, dass** die Maskierungsbeschichtung eine Dicke von 1,5 bis 8 Mikrometern, vorzugsweise von 2 bis 5 Mikrometern, aufweist.

9. Verfahren nach einem der vorhergehenden Ansprüche, **dadurch gekennzeichnet, dass** die Maskierungsbeschichtungszusammensetzung Epoxy-Verbindungen umfasst.

10. Verfahren nach Anspruch 9, **dadurch gekennzeichnet, dass** die Epoxy-Verbindungen mindestens zwei Epoxy-Gruppen pro Molekül umfassen.

11. Verfahren nach Anspruch 10, **dadurch gekennzeichnet, dass** die Epoxy-Verbindungen aus Bisphenoldiglycidylethern, Alkanoldiglycidylethern und ihren Mischungen ausgewählt werden.

12. Verfahren nach Anspruch 11, **dadurch gekennzeichnet, dass** die Epoxy-Verbindungen aus Diglycidylethern von Bisphenol A und F, bromierten Diglycidylethern von Bisphenol A und F, Butandioldiglycidylether und ihren Mischungen ausgewählt werden.

13. Verfahren nach einem der vorhergehenden Ansprüche, **dadurch gekennzeichnet, dass** die Maskierungsbeschichtungszusammensetzung keine (Meth)acrylat-Verbindung aufweist.

14. Verfahren nach einem der vorhergehenden Ansprüche, **dadurch gekennzeichnet, dass** die Maskierungsbeschichtungszusammensetzung eine photopolymerisierbare Zusammensetzung ist.

15. Verfahren nach einem der vorhergehenden Ansprüche, **dadurch gekennzeichnet, dass** diese mindestens einen kationischen Initiator umfasst.

16. Verfahren nach einem der vorhergehenden Ansprüche, **dadurch gekennzeichnet, dass** die Maskierungsbeschichtungszusammensetzung durch Zentrifugieren (Schleuderbeschichtung) oder durch Eintauchen (Tauchbeschichtung) abgeschieden wird.

17. Verfahren nach einem der vorhergehenden Ansprüche, **dadurch gekennzeichnet, dass** dieses außerdem einen Schritt der Bildung einer schlagfesten primären Beschichtung auf der Maskierungsbeschichtung umfasst.

18. Verfahren nach Anspruch 17, **dadurch gekennzeichnet, dass** der Schritt der Bildung der schlagfesten primären Beschichtung die Abscheidung von Latex auf der Maskierungsbeschichtung und die mindestens teilweise Härtung des Latex umfasst.

19. Verfahren nach Anspruch 18, **dadurch gekennzeichnet, dass** der Latex aus (Meth)acryllatex und Polyurethanlatex, vorzugsweise Polyurethanlatex, ausgewählt wird.

20. Verfahren nach einem der Ansprüche 17 bis 19, **dadurch gekennzeichnet, dass** dieses einen Schritt der Bildung einer Beschichtung gegen Interferenzstreifen zwischen der Maskierungsbeschichtung und der schlagfesten primären Beschichtung umfasst.

21. Verfahren nach Anspruch 20, **dadurch gekennzeichnet, dass** die Beschichtung gegen Interferenzstreifen eine Viertelwellenplatte darstellt.

22. Verfahren nach einem der Ansprüche 17 bis 21, **dadurch gekennzeichnet, dass** dieses außerdem einen Schritt

der Bildung einer kratzfesten Beschichtung auf der schlagfesten primären Beschichtung umfasst.

**23.** Verfahren nach einem der vorhergehenden Ansprüche, **dadurch gekennzeichnet, dass** der Brechungsindex $n_s$ des Materials des Substrats größer oder gleich 1,60, vorzugsweise größer oder gleich 1,65, besser größer oder gleich 1,70 ist.

**24.** Verfahren nach Anspruch 23, **dadurch gekennzeichnet, dass** das Material des Substrats aus Homo- und Copolymeren von Polythiourethan, Homo- und Copolymeren von Polyepisulfiden, Homo- und Copolymeren von Polycarbonat, Homo- und Copolymeren von Polythio(meth)acrylaten und ihren Kombinationen, vorzugsweise Homo- und Copolymeren von Polythiourethan, ausgewählt wird.

**25.** Verfahren nach Anspruch 24, **dadurch gekennzeichnet, dass** das Material des Substrats ein Material auf der Basis von Polythiourethanen ist, das durch Polyaddition mindestens eines Diisocyanats und mindestens eines Polythiols erhalten wird.

**26.** Verfahren nach Anspruch 25, **dadurch gekennzeichnet, dass** das Diisocyanat Xylylendiisocyanat $(C_6H_4(CH_2NCO)_2$ ist.

**27.** Verfahren nach Anspruch 25 oder 26, **dadurch gekennzeichnet, dass** das (die) Polythiol(e) aus Tri- und Tetrathiolen ausgewählt wird (werden).

**28.** Verfahren nach Anspruch 27, **dadurch gekennzeichnet, dass** die Polythiole ausgewählt werden aus den Verbindungen der Formeln:

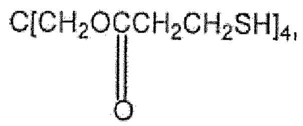

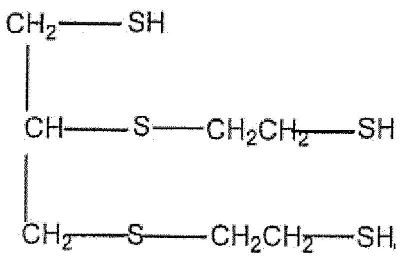

und

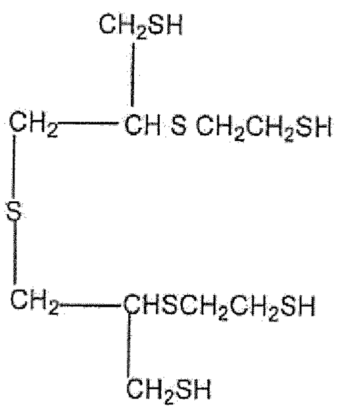

.

**29.** Verfahren nach Anspruch 25, **dadurch gekennzeichnet, dass** das Material des Substrats erhalten wird aus der Polyaddition von Xylylendiisocyanat und Polythiol der Formel:

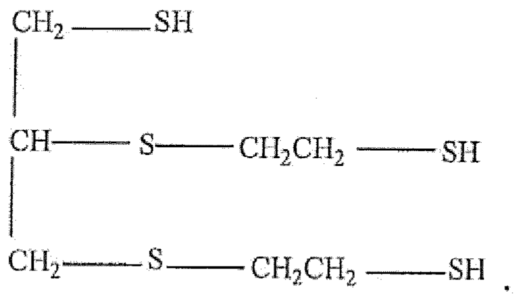

**30.** Verfahren nach Anspruch 24, **dadurch gekennzeichnet, dass** das Material des Substrats ein Homo- oder Copolymer von Polyepisulfid ist, das erhalten wird aus der Polymerisation oder Copolymerisation eines Diepisulfids der Formel:

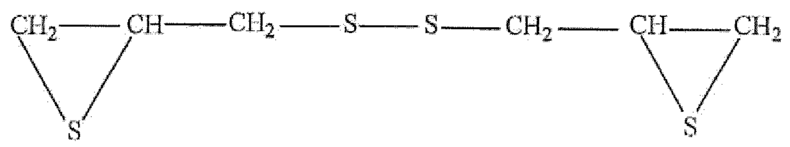

oder der Formel

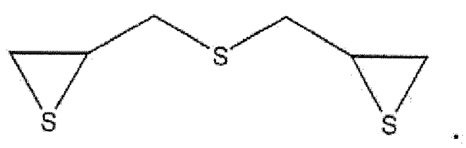

**31.** Verfahren nach einem der vorhergehenden Ansprüche, **dadurch gekennzeichnet, dass** dieses ein optisches Glas, vorzugsweise eine ophthalmische Linse, bildet.

**32.** Verfahren nach einem der vorhergehenden Ansprüche, **dadurch gekennzeichnet, dass** die einzelnen feinen Kratzspuren eine Tiefe von der Hauptfläche des Substrats bis zur Spitze aufweisen, die von 0,5 $\mu$m bis 2 $\mu$m variiert.

**33.** Gegenstand, umfassend ein transparentes Material mit einem Brechungsindex $n_s$, wobei mindestens eine Hauptfläche von diesem einen Wert $R_a$ hat, der von 0,001 bis 0,01 $\mu$m variiert, und Oberflächendefekte in der Form von einzelnen feinen Kratzspuren aufweist, und eine transparente Maskierungsbeschichtung, mit einem Brechungsindex $n_c$, mit einer Dicke von weniger als 10 $\mu$m, die direkt die Hauptfläche des Substrats bedeckt, wobei die Brechungsindizes $n_s$ und $n_c$ die Beziehung $0,01 < |n_s - n_c| \leq 0,15$, vorzugsweise $0,05 \leq |n_s - n_c| \leq 0,15$, erfüllen.

**34.** Gegenstand nach Anspruch 33, **dadurch gekennzeichnet, dass** die einzelnen feinen Kratzspuren einen Querschnitt in der Form eines Keils aufweisen.

**35.** Gegenstand nach Anspruch 33 oder 34, **dadurch gekennzeichnet, dass** die Maskierungsbeschichtung keinen Lack auf der Basis von $\gamma$-Glycidoxypropyltrimethoxysilan umfasst, enthaltend ein mineralisches Kolloid, ausgewählt aus $TiO_2$ mit einer kristallografischen Anatas-Struktur und Mischungen $TiO_2/ZrO_2/SiO_2$, wobei $TiO_2$ eine kristallografische Anatas-Struktur aufweist.

**36.** Gegenstand nach einem der Ansprüche 33 bis 35, **dadurch gekennzeichnet, dass** das Auftreten einzelner feiner Kratzspuren keinen regelmäßigen Charakter aufweist.

**37.** Gegenstand nach einem der Ansprüche 33 bis 36, **dadurch gekennzeichnet, dass** die einzelnen feinen Kratzspuren konzentrisch auf der Hauptfläche des Substrats verteilt sind.

**38.** Gegenstand nach einem der Ansprüche 33 bis 37, **dadurch gekennzeichnet, dass** die Maskierungsbeschichtung eine Dicke von 1,5 bis 8 Mikrometern, vorzugsweise von 2 bis 5 Mikrometern, aufweist.

**39.** Gegenstand nach einem der Ansprüche 33 bis 38, **dadurch gekennzeichnet, dass** die Maskierungsbeschichtungszusammensetzung Epoxy-Verbindungen umfasst.

**40.** Gegenstand nach Anspruch 39, **dadurch gekennzeichnet, dass** die Epoxy-Verbindungen mindestens zwei Epoxy-Gruppen pro Molekül umfassen.

**41.** Gegenstand nach Anspruch 40, **dadurch gekennzeichnet, dass** die Epoxy-Verbindungen aus Bisphenoldiglycidylethern, Alkanoldiglycidylethern und ihren Mischungen ausgewählt sind.

**42.** Gegenstand nach Anspruch 41, **dadurch gekennzeichnet, dass** die Epoxy-Verbindungen aus Diglycidylethern von Bisphenol A und F, bromierten Diglycidylethern von Bisphenol A und F, Butandioldiglycidylether und ihren Mischungen ausgewählt sind.

**43.** Gegenstand nach einem der Ansprüche 33 bis 42, **dadurch gekennzeichnet, dass** die Maskierungsbeschichtungszusammensetzung keine (Meth)acrylat-Verbindung aufweist.

**44.** Gegenstand nach einem der Ansprüche 33 bis 43, **dadurch gekennzeichnet, dass** dieser eine schlagfeste primäre Beschichtung auf der Maskierungsbeschichtung umfasst.

**45.** Gegenstand nach Anspruch 44, **dadurch gekennzeichnet, dass** die schlagfeste Beschichtung aus einem gehärteten Latex besteht, der aus (Meth)acryl- und Polyurethanlatex, vorzugsweise Polyurethanlatex, ausgewählt ist.

**46.** Gegenstand nach einem der Ansprüche 44 bis 45, **dadurch gekennzeichnet, dass** dieser eine Beschichtung gegen Interferenzstreifen zwischen der Maskierungsbeschichtung und der schlagfesten primären Beschichtung umfasst.

**47.** Gegenstand nach Anspruch 46, **dadurch gekennzeichnet, dass** die Beschichtung gegen Interferenzstreifen eine Viertelwellenplatte darstellt.

**48.** Gegenstand nach einem der Ansprüche 44 bis 47, **dadurch gekennzeichnet, dass** dieser eine kratzfeste Beschichtung auf der schlagfesten primären Beschichtung umfasst.

**49.** Gegenstand nach einem der Ansprüche 33 bis 48, **dadurch gekennzeichnet, dass** der Brechungsindex $n_s$ des Materials des Substrats größer oder gleich 1,60, vorzugsweise größer oder gleich 1,65, besser größer oder gleich 1,70 ist.

**50.** Gegenstand nach einem der Ansprüche 33 bis 49, **dadurch gekennzeichnet, dass** das Material des Substrats aus Homo- und Copolymeren von Polythiourethan, Homo- und Copolymeren von Polyepisulfiden, Homo- und Copolymeren von Polycarbonat, Homo- und Copolymeren von Polythio(meth)acrylaten und ihren Kombinationen, vorzugsweise Homo- und Copolymeren von Polythiourethan, ausgewählt ist.

**51.** Gegenstand nach einem der Ansprüche 33 bis 50, **dadurch gekennzeichnet, dass** dieser ein optisches Glas, vorzugsweise eine ophthalmische Linse, bildet.

## Claims

**1.** Process for obtaining a transparent article free of visible surfacing lines, comprising:

- obtaining a substrate made of a transparent material having a refractive index $n_s$, at least one main face of which has been roughed and polished to a value of $R_a$ varying from 0.001 to 0.01 μm but which has visible surface defects in the form of thin individual scratches;
- depositing directly on the roughed and polished main face of the substrate a polymerizable liquid masking coating composition having a contact angle with the main face of the substrate of at most 30°, and forming by polymerization a masking coating having a refractive index $n_c$ such that $0.01 < |n_s-n_c| \leq 0.15$, preferably $0.05 \leq |n_s-n_c| \leq 0.15$, and a thickness of less than 10 micrometers;
- polymerizing the masking coating composition; and
- recovering the transparent article, of which the roughed and polished main face of the substrate is directly coated by the masking coating, and which is free of visible thin surfacing scratches.

2. Process according to Claim 1, **characterized in that** the thin individual scratches have a wedge-shaped cross section.

3. Process according to Claim 1 or 2, wherein the roughed and polished main face of the substrate has not undergone a smoothing step before the polishing step.

4. Process according to any one of Claims 1 to 3, **characterized in that** the occurrence of the thin individual scratches is not periodic in nature.

5. Process according to any one of Claims 1 to 4, **characterized in that** the thin individual scratches are distributed concentrically over the main face of the substrate.

6. Process according to any one of the preceding claims, **characterized in that** the contact angle of the masking coating composition with the main face of the substrate is at most 25°, preferably at most 20°.

7. Process according to any one of the preceding claims, **characterized in that** the contact angle of the masking coating composition with the main face of the substrate varies from 2° to 17°, preferably from 5° to 15°.

8. Process according to any one of the preceding claims, **characterized in that** the masking coating has a thickness of 1.5 to 8 micrometers, preferably of 2 to 5 micrometers.

9. Process according to any one of the preceding claims, **characterized in that** the masking coating composition comprises epoxy compounds.

10. Process according to Claim 9, **characterized in that** the epoxy compounds comprise at least two epoxy groups per molecule.

11. Process according to Claim 10, **characterized in that** the epoxy compounds are selected from bisphenol diglycidyl ethers, alkanol diglycidyl ethers and mixtures thereof.

12. Process according to Claim 11, **characterized in that** the epoxy compounds are selected from bisphenol A and F diglycidyl ethers, brominated bisphenol A and F diglycidyl ethers, butanediol diglycidyl ether and mixtures thereof.

13. Process according to any one of the preceding claims, **characterized in that** the masking coating composition is free of any (meth)acrylate compound.

14. Process according to any one of the preceding claims, **characterized in that** the masking coating composition is a photopolymerizable composition.

15. Process according to any one of the preceding claims, **characterized in that** it comprises at least one cationic initiator.

16. Process according to any one of the preceding claims, **characterized in that** the masking coating composition is deposited by spin coating or by dip coating.

17. Process according to any one of the preceding claims, **characterized in that** it additionally comprises a step of forming an impact-resistant primer coating on the masking coating.

18. Process according to Claim 17, **characterized in that** the step of forming the impact-resistant primer coating comprises the deposition of a latex on the masking coating and the at least partial curing of the latex.

19. Process according to Claim 18, **characterized in that** the latex is selected from (meth)acrylic latices and polyurethane latices, preferably polyurethane latices.

20. Process according to any one of Claims 17 to 19, **characterized in that** it comprises a step of forming an anti-interference-fringe coating between the masking coating and the impact-resistant primer coating.

21. Process according to Claim 20, **characterized in that** the anti-interference-fringe coating constitutes a quarter-wave plate.

**22.** Process according to any one of Claims 17 to 21, **characterized in that** it additionally comprises a step of forming an abrasion-resistant coating on the impact-resistant primer coating.

**23.** Process according to any one of the preceding claims, **characterized in that** the refractive index $n_s$ of the material of the substrate is equal to or greater than 1.60, preferably equal to or greater than 1.65, better still equal to or greater than 1.70.

**24.** Process according to Claim 23, **characterized in that** the material of the substrate is selected from polythiourethane homopolymers and copolymers, polyepisulfide homopolymers and copolymers, polycarbonate homopolymers and copolymers, polythio(meth)acrylate homopolymers and copolymers, and combinations thereof, preferably polythiourethane homopolymers and copolymers.

**25.** Process according to Claim 24, **characterized in that** the material of the substrate is a polythiourethane-based material resulting from the polyaddition of at least one diisocyanate and at least one polythiol.

**26.** Process according to Claim 25, **characterized in that** the diisocyanate is xylylene diisocyanate ($C_6H_4(CH_2NCO)_2$).

**27.** Process according to Claim 25 or 26, **characterized in that** the polythiol(s) is (are) selected from trithiols and tetrathiols.

**28.** Process according to Claim 27, **characterized in that** the polythiols are selected from the compounds of formulae:

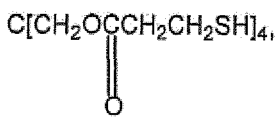

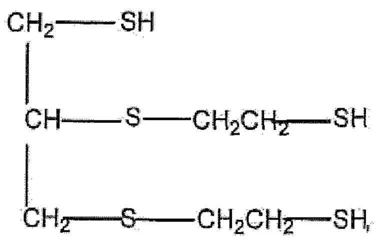

and

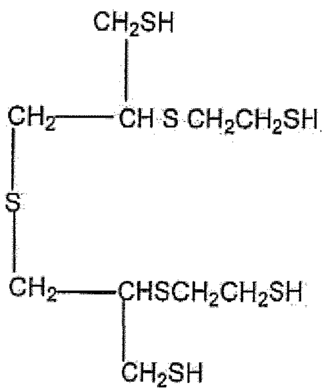

**29.** Process according to Claim 25, **characterized in that** the material of the substrate results from the polyaddition of xylylene diisocyanate and the polythiol of formula:

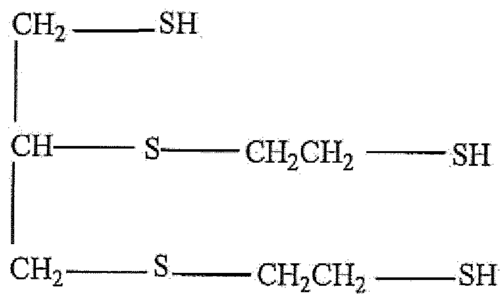

**30.** Process according to Claim 24, **characterized in that** the material of the substrate is a polyepisulfide homopolymer or copolymer resulting from the polymerization or copolymerization of a diepisulfide of formula:

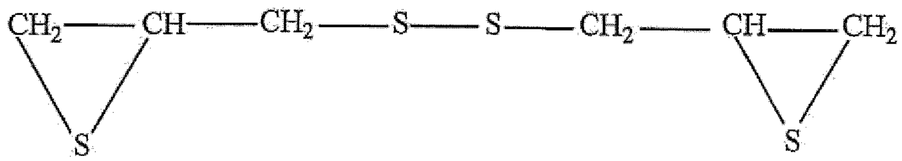

or of formula

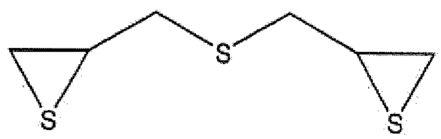

**31.** Process according to any one of the preceding claims, **characterized in that** it constitutes an optical lens, preferably an ophthalmic lens.

**32.** Process according to any one of the preceding claims, **characterized in that** the thin individual scratches have a depth, from the main face of the substrate to the tip, varying from 0.5 μm to 2 μm.

**33.** Article comprising a substrate made of a transparent material having a refractive index $n_s$, at least one main face of which has a value of $R_a$ varying from 0.001 to 0.01 μm and has surface defects in the form of thin individual scratches, and a transparent masking coating, having a refractive index $n_c$, and having a thickness of less than 10 μm directly covering said main face of the substrate, the refractive indices $n_s$ and $n_c$ satisfying the relationship $0.01 < |n_s-n_c| \leq 0.15$, preferably $0.05 \leq |n_s-n_c| \leq 0.15$.

**34.** Article according to Claim 33, **characterized in that** the thin individual scratches have a wedge-shaped cross section.

**35.** Article according to Claim 33 or 34, **characterized in that** the masking coating does not comprise γ-glycidoxypropyltrimethoxysilane-based varnish containing a mineral colloid selected from among $TiO_2$ having an anatase crystallographic structure and the $TiO_2/ZrO_2/SiO_2$ mixtures in which $TiO_2$ has an anatase crystallographic structure.

**36.** Article according to any one of Claims 33 to 35, **characterized in that** the occurrence of the thin individual scratches is not periodic in nature.

**37.** Article according to any one of Claims 33 to 36, **characterized in that** the thin individual scratches are distributed concentrically over the main face of the substrate.

**38.** Article according to any one of Claims 33 to 37, **characterized in that** the masking coating has a thickness of 1.5 to 8 micrometers, preferably of 2 to 5 micrometers.

**39.** Article according to any one of Claims 33 to 38, **characterized in that** the masking coating composition comprises epoxy compounds.

**40.** Article according to Claim 39, **characterized in that** the epoxy compounds comprise at least two epoxy groups per molecule.

**41.** Article according to Claim 40, **characterized in that** the epoxy compounds are selected from bisphenol diglycidyl ethers, alkanol diglycidyl ethers and mixtures thereof.

**42.** Article according to Claim 41, **characterized in that** the epoxy compounds are selected from bisphenol A and F diglycidyl ethers, brominated bisphenol A and F diglycidyl ethers, butanediol diglycidyl ether and mixtures thereof.

**43.** Article according to any one of Claims 33 to 42, **characterized in that** the masking coating composition is free of any (meth)acrylate compound.

**44.** Article according to any one of Claims 33 to 43, **characterized in that** it comprises an impact-resistant primer coating on the masking coating.

**45.** Article according to Claim 44, **characterized in that** the impact-resistant coating consists of a cured latex selected from (meth)acrylic latices and polyurethane latices, preferably polyurethane latices.

**46.** Article according to either one of Claims 44 and 45, **characterized in that** it comprises an anti-interference-fringe coating between the masking coating and the impact-resistant primer coating.

**47.** Article according to Claim 46, **characterized in that** the anti-interference-fringe coating constitutes a quarter-wave plate.

**48.** Article according to any one of Claims 44 to 47, **characterized in that** it comprises an abrasion-resistant coating on the impact-resistant primer coating.

**49.** Article according to any one of Claims 33 to 48, **characterized in that** the refractive index $n_s$ of the material of the substrate is equal to or greater than 1.60, preferably equal to or greater than 1.65, better still equal to or greater than 1.70.

**50.** Article according to any one of Claims 33 to 49, **characterized in that** the material of the substrate is selected from polythiourethane homopolymers and copolymers, polyepisulfide homopolymers and copolymers, polycarbonate homopolymers and copolymers, polythio(meth)acrylate homopolymers and copolymers, and combinations thereof, preferably polythiourethane homopolymers and copolymers.

**51.** Article according to any one of Claims 33 to 50, **characterized in that** it constitutes an optical lens, preferably an ophthalmic lens.

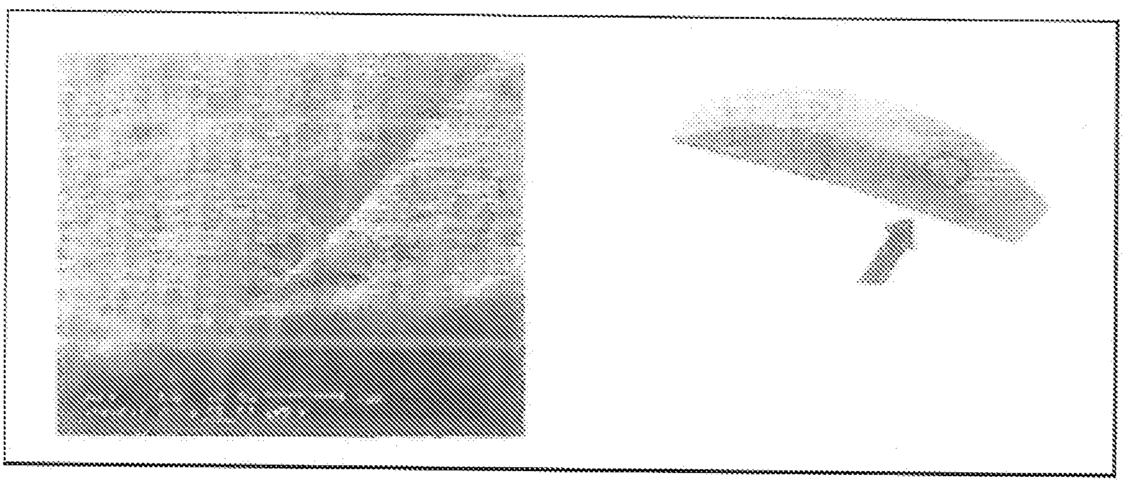

Fig. 1

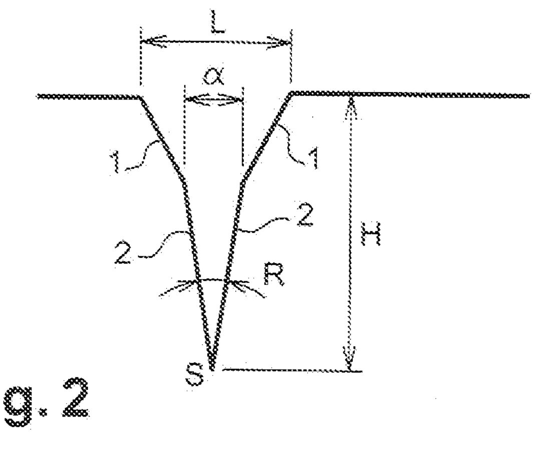


Fig. 2

Fig. 3

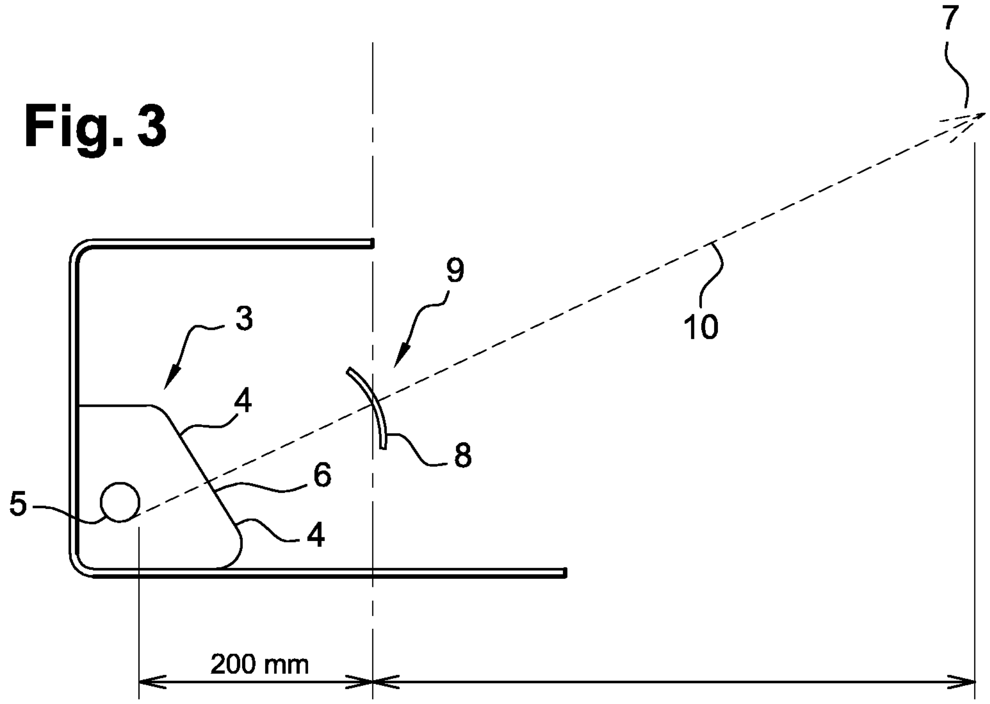


Fig. 4

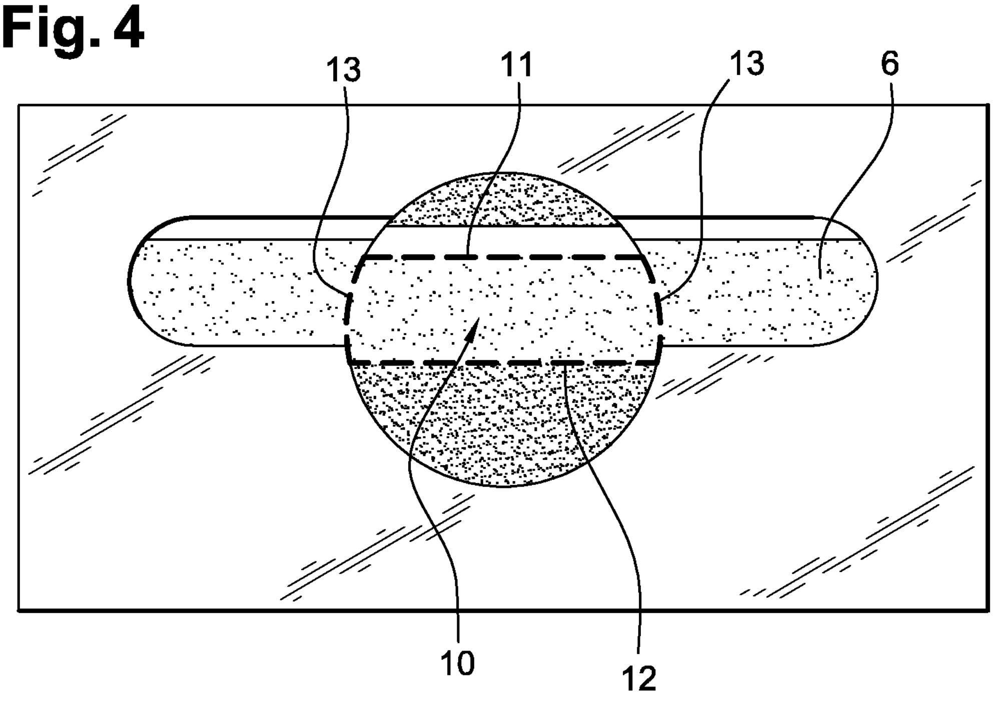

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4417790 A
- WO 0167139 A
- WO 01167139 A
- FR 2734827 A
- US 4689387 A
- US 4775733 A
- US 5191055 A
- US 5087758 A
- WO 03040205 A
- EP 1394495 A
- EP 761665 A
- EP 785194 A
- EP 874016 A
- US 6204311 B
- US 3981897 A
- US 4058401 A
- US 4101513 A
- US 4138255 A
- US 4161471 A
- WO 9410230 A
- EP 730168 A
- JP 11310755 B
- JP 200204301 B
- JP 2002363442 B
- US 5015523 A
- US 5619288 A
- JP 63141001 A
- JP 63087223 A
- EP 040411 A
- US 5316791 A
- FR 2790317
- US 4211823 A
- EP 614957 A
- EP 1362246 A